# EUROPEAN PATENT APPLICATION

(11) **EP 4 779 911 A1**
(43) Date of publication of application: **22.07.2026**
(21) Application number: 25152085.4
(22) Date of filing: 15.01.2025
(51) Int. Cl.: H04L 1/00

(54) **USER EQUIPMENT, NETWORK NODE, AND METHOD FOR CSI REPORTING**

(71) Applicant: Panasonic Intellectual Property Corporation of America, Torrance, CA 90504 (US)
(72) Inventor: ZEINEDDINE, Khalid, 63225 Langen (DE); SUZUKI, Hidetoshi, Osaka, 571-8501 (JP)
(74) Representative: Grünecker Patent- und Rechtsanwälte PartG mbB

(57) **Abstract**

Provided is a user equipment, UE, comprising a transceiver which, in operation, receives Downlink Control Information, DCI, including a Channel State Information, CSI, request. The CSI request indicates a group of CSI report configurations, and the group of CSI report configurations includes an event-triggered CSI report configuration and/or a network, NW,-requested CSI report configuration, wherein the event-triggered CSI report configuration pertains to event-triggered CSI information and the NW-requested CSI report configuration pertains to NW-requested CSI information. The UE further comprises processing circuitry which, in operation, performs a determination as to which of the event-triggered CSI information and/or the NW-requested CSI information is to be transmitted, based on the CSI request, wherein the processing circuitry controls the transceiver according to the determination.

## Description

### BACKGROUND

### 1. Technical Field

The present disclosure is directed to methods, devices and articles in communication systems, such as 3GPP communication systems.

### 2. Description of the Related Art

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing a user equipment to perform an improved UE-initiated/event-triggered CSI reporting procedure.

In an embodiment, the techniques disclosed here feature a user equipment, UE, comprising a transceiver and processing circuitry. The transceiver, in operation, receives Downlink Control Information, DCI, including a Channel State Information, CSI, request, wherein the CSI request indicates a group of CSI report configurations. The group of CSI report configurations includes an event-triggered CSI report configuration and/or a network, NW,-requested CSI report configuration, wherein the event-triggered CSI report configuration pertains to event-triggered CSI information and the NW-requested CSI report configuration pertains to NW-requested CSI information. The processing circuitry, in operation, performs a determination as to which of the event-triggered CSI information and/or the NW-requested CSI information is to be transmitted, based on the CSI request, wherein the processing circuitry controls the transceiver according to the determination.

It should be noted that general or specific embodiments may be implemented as a system, a method, an integrated circuit, a computer program, a storage medium, or any selective combination thereof. For instance, an integrated circuit can control a process of a UE or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: illustrates a simplified and exemplary implementation of a set of synchronization signal blocks distributed in a half-frame;
- **Fig. 3**: illustrates several beams and the corresponding SSB index, SSB1-SSB8, and how the beams are transmitted by the gNB in a beam-sweeping manner;
- **Fig. 4**: illustrates a signaling diagram for CSI measurement and reporting;
- **Fig. 5**: illustrates a DCI containing a CSI request field that indicates a group of CSI report configurations;
- **Fig. 6**: illustrates a DCI containing a CSI request field that indicates a group of CSI report configurations, wherein the indicated group includes CSI report configurations pertaining to event-triggered CSI information and a CSI report configuration pertaining to NW-requested CSI information;
- **Fig. 7**: is a block diagram of a communication system in accordance with exemplary embodiments of the present disclosure;
- **Fig. 8**: illustrates the steps of a method for a UE according to an embodiment;
- **Fig. 9**: illustrates the steps of a method for a network node according to an embodiment;
- **Fig. 10**: illustrates a flowchart for an exemplary implementation of a method for a UE
- **Fig. 11**: a flowchart for an exemplary implementation of method for a network node; and
- **Fig. 12**: shows exemplary functional split options in 5G O-RAN.

### DETAILED DESCRIPTION

### 5G NR system architecture and protocol stacks

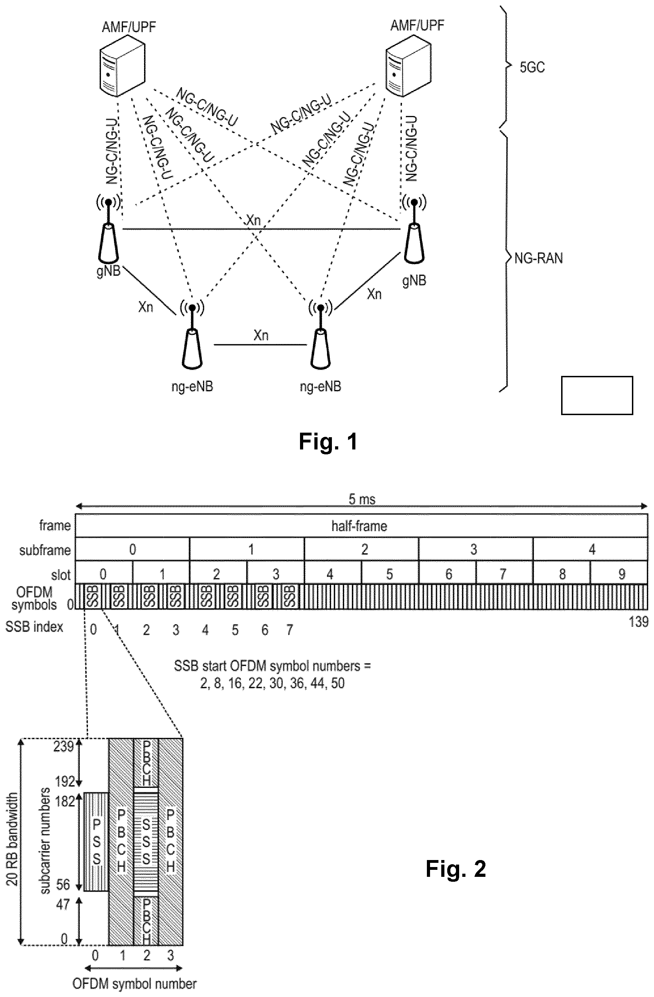

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v18.0.0, section 4).

### Synchronization Signal Block measurement timing configuration - SMTC - PSS/SSS, PBCH

NR has introduced the so-called synchronization signal block, SS block (SSB), which comprises a Primary Synchronization Signal (PSS), a Secondary Synchronization Signal (SSS), and a Physical Broadcast CHannel (PBCH) (e.g. PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not as being part of one SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence. Information on the current exemplary 5G implementation of the PSS and SSS is available from 3GPP TS 38.211 v17.6.0 sections 7.4.2.2 and 7.4.2.3 (see also 3GPP TS 38.211 v18.1.0 sections 7.4.2.2 and 7.4.2.3), including the respective sequence generation and mapping to physical resources.

The time-frequency structure of an SS/PBCH block, carrying the SSS is described in the 3GPP TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

A simplified and exemplary illustration of the SSB according to the above definitions is illustrated in **Fig. 2****,** which shows at the bottom part the PSS, SSS, and PBCH in the time and frequency domain.

The SSB set illustrated in Fig. 2 shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponding set of SSBs, including the periodicity.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

In brief, a set of candidate SSBs is configured for use by the gNB in the cell. Furthermore, among the set of candidate SSBs, the gNB can then select either all or fewer candidate SSBs to actually transmit, called an SSB pattern.

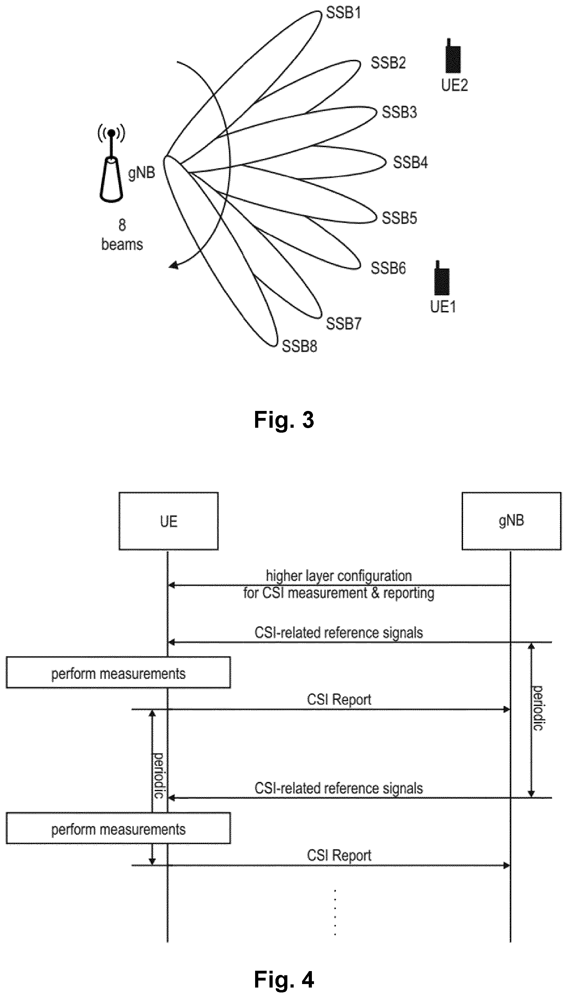

All the SSBs can be transmitted with all beams in the system. Alternatively, the SSBs can be transmitted in different beams, e.g. when SSB beamforming is enabled. In that case, each SSB is transmitted on a different spatial beam, as illustrated in Fig. 3. Similar to the exemplary assumption of Fig. 2, there are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanisms, such as for serving cell measurements, time / frequency synchronization etc.

### Reference Signals

Several different types of reference signals (RS) are used for 5G NR (see 3GPP TS 38.211 v18.1.0 section 7.4.1). At least the following reference signals are available in 5G NR:
- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH
- Tracking Reference Signal, usable for time tracking, also called "CSI-RS for tracking" (see 3GPP TS 38.214 v18.1.0 e.g. section 8.4.1)
- RIM reference signals
- Positioning reference signals

As a DL-only signal, the CSI-RS, which the UE receives, can be used by the UE to estimate the channel and to report channel quality information back to the gNB (assists the gNB in modulation coding scheme selection, resource allocation, beamforming, MIMO rank selection). The CSI-RS can be configured for periodic, aperiodic (e.g. DCI triggered), or semi-persistent transmission by the gNB. The CSI-RS also can be used for interference measurement (IM) and fine frequency/time tracking purposes. Specific instances of CSI-RS can be configured for time/frequency tracking and mobility measurements. During MIMO operations, NR may use different antenna approaches based on the carrier frequency. At lower frequencies, the system uses a modest number of active antennas for MU-MIMO and adds FDD operations. In this case, the UE may use the CSI-RS to calculate the CSI and report it back in the UL direction.

The CSI-RS is UE-specific; nonetheless, multiple users can share the same CSI-RS resource. In particular, a UE-specific configuration of a CSI-RS does not necessarily mean that a transmitted CSI-RS can only be used by a single device, rather the same set of CSI-RS resources can be separately configured for multiple devices, which means that a single CSI-RS can be shared among multiple devices.

While the CSI-RS can be configured to occur anywhere in the resource block, in practice it is possible to impose some restrictions on the CSI-RS resource assignment so as to avoid collisions with other downlink physical channels and signals. As an example, the transmission of a configured CSI-RS can be such that it does not collide with a CORESET configured for the device, the DM-RS associated with the PDSCH transmissions and the SS block transmissions.

The 5G NR standard supports flexible CSI-RS configurations. In the time domain, the CSI-RS resource may start at any OFDM symbol of a slot and span 1, 2, or 4 OFDM symbols, e.g. depending on the number of configured antenna ports.

According to one example, system information signaling (e.g. one of the system information blocks) may provide the configuration of the TRS and/or the CSI-RS occasion(s) for idle and/or inactive UE(s). It may be possible that, in addition to system information, other signaling methods are supported to configure the TRS/CSI-RS occasions, e.g. dedicated RRC messages, e.g. the RRC release message.

In one exemplary 5G NR implementation, a table (see e.g. 3GPP TS 38.211, table 7.4.1.5.3-1) defines a set of candidate CSI-RS configurations, wherein each candidate CSI-RS configuration defines a set of resource elements (within a slot) on which the reference signal is transmitted. The different CSI-RS configurations differ from one another, e.g. in the number of ports, in the density and/or the cdm-type (code division multiplexing type). The gNB can inform the UE which CSI-RS the gNB is currently transmitting, using e.g. the IE *CSI-RS-ResourceMapping* that configures the resource element mapping of a CSI-RS resource in the time- and frequency domain.

### Uplink Control Information in 5G NR and Scheduling Requests

Whereas Downlink Control Information is carried by the PDCCH, Uplink Control Information (UCI) can be transmitted on the PUCCH or the PUSCH depending on the situation. Uplink control information can be e.g.
- the channel state information (CSI), related to the downlink channel conditions, used to assist downlink scheduling, including multi-antenna and beamforming schemes,
- the ACK/NACK information (Hybrid-ARQ acknowledgments for received DL-SCH transport blocks), and
- scheduling requests, indicating that a device needs uplink resources for UL-SCH transmission.

Not all of these need be carried by a single transmission. For instance, the CSI may be carried alone, or the ACK/NACK may be carried alone, or the SR may be carried alone, or the CSI and ACK/NACK are transmitted together in a PUCCH/PUSCH, etc.

The physical uplink control channel (PUCCH) is the basis for transmission of uplink control. However, NR supports UCI on PUSCH as the basic way of handling simultaneous transmission of data and control. If the device is transmitting on the PUSCH, the UCI is multiplexed with data on the granted resources instead of being transmitted on the PUCCH.

A short duration PUCCH can be transmitted in the last one or two symbols of a slot and thus supports very fast feedback of hybrid-ARQ acknowledgments in order to realize so-called self-contained slots where the delay from the end of the data transmission to the reception of the acknowledgment from the device is in the order of an OFDM symbol, corresponding to a few tens of microseconds depending on the numerology used. This can be compared to almost 3 ms in LTE and is yet another example on how the focus on low latency has impacted the NR design. For situations when the duration of the short PUCCH is too short to provide sufficient coverage, there are also possibilities for longer PUCCH durations.

There are a plurality of different PUCCH formats that can be used for transmitting the UCI, depending on the amount of information and the duration of the PUCCH transmission.

There are five PUCCH formats, 0-4. Two of the formats, 0 and 2, are sometimes referred to as short PUCCH formats, because they occupy at most 2 OFDM symbols. In many cases the last one or 2 OFDM symbols in a slot are used for PUCCH transmission, for example, to transmit a hybrid ARQ acknowledgment (ACK/NACK) for the downlink data transmission.

Three of the formats, 1, 3, and 4, are sometimes referred to as long PUCCH formats because they occupy from 4 to 14 OFDM symbols. The reason for having a longer time duration than the previous two formats is coverage. If a duration of one or two OFDM symbols does not provide sufficient received energy for a reliable reception, a longer time duration is necessary and one of the long PUCCH formats can be used.

Which PUCCH format is used can be e.g. determined based on how many bits of UCI should be transmitted and how many symbols (duration of the PUCCH) can be used (see e.g. 3GPP TS 38.211 e.g. v18.1.0, section 6.3.2).

The UCI can be transmitted on the PUCCH flexibly in the time and frequency domain using specifically assigned radio resources, e.g. PUCCH resource sets. A UE can be configured e.g. with up to four sets of PUCCH resources, wherein a PUCCH resource set is associated with a PUCCH resource set index. In particular, a PUCCH resource set contains at least four PUCCH resource configurations, where each resource configuration contains the PUCCH format to use and all the transmission parameters necessary for that format. The configuration of such resources can be done by different information elements, e.g. of the RRC protocol layer, such as the PUCCH-Config information element (see e.g. 3GPP TS 38.331 e.g. v18.0.0, such as section 6.3.2).

As mentioned, up to four PUCCH resource sets can be configured for a UE, each of them corresponding to a certain range of UCI feedback to transmit. For instance, PUCCH resource set 0 can handle UCI payloads up to two bits and hence only contains PUCCH formats 0 and 1, while the remaining PUCCH resource sets may contain any PUCCH format except format 0 and 1. One example configuration according to 3GPP is provided as follows as part of the PUCCH-Config IE (see e.g. 3GPP TS 38.331 v18.0.0)

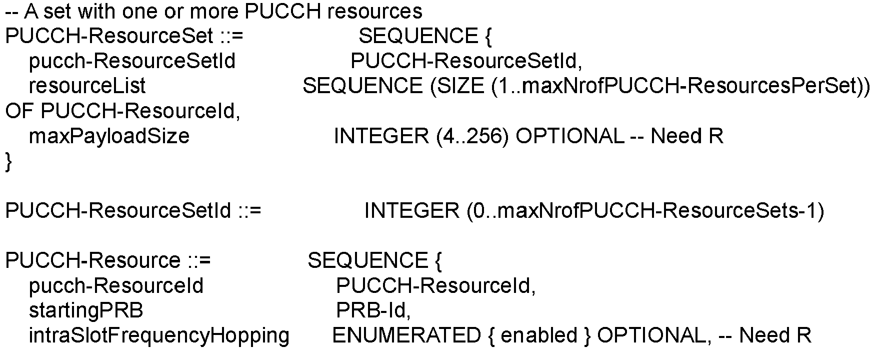

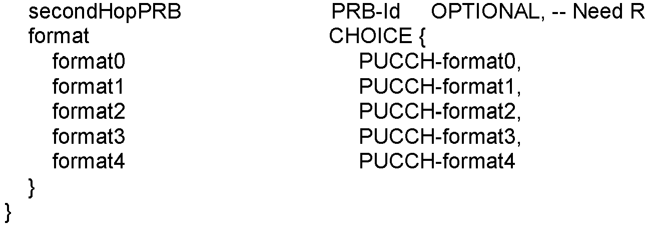

The current reporting of the UCI in the PUCCH is defined in 3GPP TS 38.213 e.g. v18.1.0, section 9.2.

A PUCCH resource may include one or more of the following parameters.
- A PUCCH resource index
- An index of the first PRB (Physical Resource Block) prior to frequency hopping and for no frequency hopping
- An index of the first PRB after frequency hopping
- An indication for intra-slot frequency hopping
- A configuration for a PUCCH format

The PUCCH resources are assigned by the gNB such that they are different for each UE. UEs use the preconfigured PUCCH resources without any coordination of the gNB. By assigning different PUCCH resources to the UE, it is ensured that UEs may use these resources at the same time without causing collisions or interference with one another.

The transmission of a scheduling request using the PUCCH is defined in 3GPP TS 38.213 e.g. section 9.2.4. A UE is configured with specific parameters for determining the scheduling-request radio resources to be used for transmitting a scheduling request (SR). For instance, periodicity and offset are defined for the SR transmission and are used to determine the slot and/or the frame number for the SR transmission occasion based on the configured PUCCH resource set(s).

In said respect, the configuration of such SR resources can be done by different information elements, e.g. of the RRC protocol layer, such as the *SchedulingRequestConfig* information element (which is configured inside the *MAC-CellGroupConfig* IE) and the *SchedulingRequestResourceConfig* information element (see e.g. 3GPP TS 38.331 v16.7.0, such as section 6.3.2). The *MAC-CellGroupConfig* IE configures the set of scheduling requests, used by the UE (ID, prohibit timer, etc.) and tied by the ID number to the SchedulingRequestResourceConfig which determines the PUCCH resources used alongside the periodicity among other parameters. Finally, in the *LogicalChannelConfig* IE, the logical channel is tied to a scheduling request ID (for details of the above lEs, see 3GPP TS 38.331 v18.0.0).

In brief, the scheduling request is basically a flag (1-bit) used by the user equipment to request uplink resources from the uplink scheduler at the base station. Since the device requesting the resources, by definition, has no PUSCH resource available, the scheduling request is transmitted on the PUCCH using the preconfigured and periodically reoccurring PUCCH resources dedicated to the UE. The serving base station can then assign radio resources to the user equipment.

Each SR configuration consists of a set of periodically reoccurring PUCCH resources across different BWPs and cells (i.e. each SR configuration consists of a set of PUCCH resources tied to a numerology, BWP, and cell). With a dedicated scheduling-request mechanism, there is no need to provide the identity of the device requesting to be scheduled because the identity is implicitly known from the resources upon which the request is transmitted.

Each SR also corresponds to one or more logical channels which means that UE is able to make the query for UL resources for a selected logical channel. For a logical channel at most one PUCCH resource per BWP is configured. This provides the gNB not only with information that there are data awaiting transmission in the device, but also what type of data are awaiting transmission. This is useful information for the gNB given the wider range of traffic types the NR is designed to handle. For example, the gNB may want to schedule a device for transmission of latency-critical information but not for non-latency-critical information.

Each device can be assigned dedicated PUCCH scheduling request resources with a periodicity ranging from every second OFDM symbol to support very latency-critical services up to every 80 ms for low overhead. Only one scheduling request can be transmitted at a given time, that is, in the case of multiple logical channels having data to transmit a reasonable behavior is to trigger the scheduling request corresponding to the highest-priority logical channel.

UE may send up to a maximum number of SR requests and the maximum value is configured by network. A scheduling request is repeated in subsequent resources, up to a configurable limit, until a grant is received from the gNB. It is also possible to configure a prohibit timer, controlling how often a scheduling request can be transmitted which prevents UE from sending multiple SRs consecutively. An SR cannot be sent during a measurement gap or when UL-SCH is scheduled.

Finally, when the UE is in RRC_CONNECTED state and UL data arrives, but the UE is not configured with PUCCH resource for scheduling requests, the UE uses the CBRA, contention based random access, procedure based on the SS/PBCH blocks. Moreover, when the UE sends a scheduling request in response to UL data arrival but fails to receive an UL grant from the network, the UE uses the CBRA procedure based on the SS/PBCH blocks. This is because an SR is considered as pending until resources are granted by the gNB and is repeated on the PUCCH as long as it is pending. When the number of SRs sent on the PUCCH reaches a maximum configured by the higher layer, SR failure is declared, and a random access procedure is triggered.

### Beam management

Beam management is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into the following three main procedures:
- initial beam establishment,
- beam adjustment (also called beam tracking and refining), and
- beam failure recovery.

In brief, the network may configure periodic or semi-persistent beam reporting or trigger aperiodic beam reporting for the purpose of timely acquiring a best/preferred beam for data /control transmissions. UE performs measurements on reference signals (SSBs and/or CSI-RSs), configured by the gNB, to determine the best reception (Rx) beam (and possibly transmission, Tx, beam as well, in case of beam correspondence). In one example, for determining the UE Tx beam, the UE is configured by the gNB to transmit SRSs (Sounding Reference Signals) in different directions to the gNB, and in turn the gNB determines and indicates to the UE the best/preferred UL beam using an SRI (SRS Resource Indicator). Beam management procedure(s) can take place during the RACH (Random Access Channel) procedure, when the gNB sweeps beams by using different DL beams for each SSB, and the UE informs the gNB about the best/preferred Rx beam by using a specific PRACH resource mapped to the selected DL beam. The beam management procedure can e.g. be part or use the CSI framework. The CSI reporting can be configured by the network to occur periodically (e.g. RRC-configured), semi-persistently (e.g. triggered by MAC-CE and/or DCI) or aperiodically (e.g. triggered by DCI). For beam management, when part of the CSI framework, a UE may be configured using an information element, IE, *CSI-ReportConfig,* with the higher-layer parameter reportQuantity set to one or more of "cri-RSRP", "cri-SINR", "ssb-Index-RSRP", "ssb-Index-SINR", "cri-RSRP-Index", "ssb-Index-RSRP- Index", "cri-SINR-Index", "ssb-Index-SINR- Index".

### Initial beam establishment

Initial beam establishment includes the procedures and functions by which a beam pair is initially established in the downlink (DL) and uplink transmission (UL) directions, for example, when a connection is established. In the current 5G NR standard, this can be done via beam sweeping, where different SSBs that are associated with different transmission, Tx, beams are transmitted in different OFDM symbols.

During beam sweeping, a gNB transmits beams in all directions in a burst at regularly defined intervals. Whenever a UE is synchronizing with the network, it reads the synchronization signal block, SSB, and extracts the primary synchronization signal, PSS, the secondary synchronization signal, SSS, the physical broadcast channel, PBCH, and the demodulation reference signal, DMRS of the PBCH.

A single SS block spans four OFDM symbols in time and 240 subcarriers in frequency (20 resource blocks) (see Fig. 2). Each SS block corresponds to a specific beam, beamformed in a different direction. A group of SS blocks forms one SS burst set that spans a 5ms window. The SS burst is repeated periodically with a period of 20 ms, wherein the maximum number of SS blocks in a SS burst set is dependent on the operating frequency range.

The UE can then search for the strongest DLTx beam, e.g. by adjusting the corresponding DL reception, Rx, beam at the UE side as well, and then can report the selection via a corresponding RACH occasion and preamble to the gNB. In this way, the initial beam pair is established, which may remain valid after a connection is set up until a new beam indication is received by UE.

### Beam adjustment

After the initial beam pair has been established, the beam pair may be constantly adjusted, in order to account for a movement of the UE and/or a change of the environment. This may be referred to as beam adjustment. In addition, beam management can also include refining the beam shape, for example using a narrower CSI-RS beam compared to a relatively wider SSB beam used for initial beam establishment.

The UE measures the beam strength by measuring a received signal power. In idle mode, beam measurement can be based on the synchronization signals, and in connected mode, it can be based on the channel state information reference signal, CSI-RS, in DL and on the sounding reference signal, SRS, in UL. The UE searches for the best beam periodically using predefined threshold criteria defined by the gNB and identifies the beam that has highest reference signal received power, RSRP. The UE may then perform a beam reporting procedure.

As beam adjustment does not happen simultaneously at the gNB and the UE, one beam per procedure - identified by their index - is the outcome that may be used for UL or DL communication. The gNB may use information and recommendations from the UE to enhance beam adjustment. Transmission of control signaling and data may benefit from the beams selected in the process, because beam adjustment aims at improving the link quality based on ever-changing radio channel conditions. The gNB is in charge of deciding which UL Rx and DL Tx beams it is going to use and of indicating the UE about them. Upon knowing the beams the gNB is using, the UE is able to select their own UL Tx and DL Rx beams.

### Beam failure recovery

Beam failure may happen if the beam cannot be tracked by the beam adjustment procedure described above. This can be the case, for example, when the current beam pair is suddenly blocked unexpectedly, and the beam tracking function cannot react quickly enough. Once a beam failure has occurred, beam recovery typically requires the following steps:
- beam-failure detection,
- candidate-beam identification,
- recovery-request transmission, and
- network response to the beam-recovery request.

For example, in the case of beam failure due to a poor channel condition, the beam recovery process is triggered to get back a new beam. The UE monitors the reference signal(s) and identifies the beam failure once the failure trigger conditions are met. The UE chooses the next best beam for sending in a random access (RA) preamble when the beam failure happens. If a first attempt of the RA fails, it sweeps to another beam for another RA procedure. The RA preamble is sent in the PRACH. Finally, the UE receives a downlink resource allocation and an uplink grant on the physical downlink control channel, PDCCH.

### Beam measurement and reporting

General operations performed during one or more of said above main procedures may involve one or more of:
- *beam sweeping,* i.e., covering a spatial area with a set of beams transmitted and received according to pre-specified intervals and directions,
- *beam measurement,* i.e., the evaluation of the quality of the received (beam) signal at the gNB or at the UE,
- *beam determination,* i.e., the selection of the suitable beam or beams either at the gNB or at the UE, according to measurements obtained with the beam measurement procedure, and
- *beam reporting,* i.e., a procedure used by the UE to send beam quality and beam decision information to the gNB.

In brief, beam measurement and reporting involves that the UE measures a set of reference signals (e.g. SSB, or CSI-RS), corresponding to different downlink Tx beams. The UE then reports these measurements to the network (e.g. the serving gNB). Based on the received measurements, the network can then e.g. decide a suitable downlink Tx beam for the UE. The measurement and reporting can be e.g. based on the CSI framework (see below section).

### Channel State Information measurement and reporting framework

The network may configure a UE to perform measurements and to report the measurement results in accordance with the configuration parameters. The measurement and reporting done by a UE can be for instance based on the CSI reporting framework of 5G NR, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resources are defined by the lEs *CSI-IM-Resource,* and *SSB-Index.*
2) List of *CSI-ResourceConfig* lEs
   - Different *CSI-ResourceConfig* in the list can contain one or more different RS resource sets, chosen from List element 1). This may include *NZP-CSI-RS-ResourceSet, CSI-IM-ResourceSet,* and/or *CSI-SSB-ResourceSet,* respectively identified by suitable IDs (see e.g. *NZP-CSI-RS-ResourceSetId, CSI-IM-ResourceSetld,* and/or *CSI-SSB-ResourceSetld)*
3) List of CSI-ReportConfig lEs.
   - Different *CSI-ReportConfig* in the list configure different CSI report instances. This is the Information Element which links the reporting configuration of this *CSI-ReportConfig* (such as by PUCCH or PUSCH) to the measurement resource sets (i.e. one *CSI-ResourceConfig* in the above List element 2). *CSI-ResourceConfiglD,* being included in the *CSI-ReportConfig* IE, identifies a *CSI-ResourceConfig* IE to be used.

Measurements and reporting can be carried out on a periodic, semi-periodic or aperiodic basis in the time domain. The measurements results are reported by the UE to the gNB, e.g. as uplink control information on the PUCCH or the PUSCH. In one 5G-compliant example, the CSI reporting is performed by the UE based on the definitions given in 3GPP TS 38.212 v18.1 .0, in section 6.3.

There are at least two types of reference signals that can be used for the measurements, the SSB (see above mentioned SSB-*Index*) and the CSI-RS (Channel State Information-Reference Signals; see above *NZP-CSI-RS-Resource* IE and *CSI-IM-Resource* IE). The SSB is always transmitted by the network and is not specific to a UE and is thus inflexible. For instance, the SSB can be used in connection with a comparatively wide beam. On the other hand, the CSI-RS can be specifically configured for a UE and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:
- CQI (Channel Quality Information),
- PMI (Precoding Matrix Indicator),
- CRI (CSI-RS Resource Indicator),
- SSBRI (SS/PBCH Resource Block Indicator),
- LI (Layer Indicator),
- RI (Rank Indicator),
- L1-RSRP, and/or
- Capability Index.

One or more or a combination of different metrics can be reported by the UE. Generally, the metrics can be grouped into two types:
- L1-RSRP-related quantities (e.g. cri-RSRP and ssb-Index-RSRP, see later IE CSI-*Report Config)*
- CSI-related quantities (e.g. the rest from the IE *CSI-ReportConfig)*

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE):
*CellGroupConfig, CSI-MeasConfig, CSI-ReportConfig, CSI-ResourceConfig, NZP-CSI-RS-Resource,* and *NZP-CSI-RS-ResourceSet.*

In brief, the measurement and reporting for the LTM can be based on the CSI reporting framework of 5G. In particular, the Information Element (IE) *CSI-MeasConfig* and the Information Element *CSI-ReportConfig* indicate parameters of the CSI reporting framework usable by the UE to measure and then report the measurement results.

One possible and exemplary sequence of lEs for defining measurement and report according to the CSI framework is presented in the following:
- *CellGroupConfig* IE
   ∘ the *ServingCellConfig* IE of *SpCellConfig* or of *SCellConfig*
      ▪ *CSI-MeasConfig* IE
         - *CSI-ResourceConfig* IE
            ∘ *NZP-CSI-RS-ResourceSet*
               ▪ *NZP-CSI-RS-Resource*
            ∘ *CSI-SSB-ResourceSet*
               ▪ *SSB-Index*
            ∘ *CSI-IM-ResourceSet*
               ▪ *CSI-IM-Resource*
         - *CSI-ReportConfig* IE

**Fig. 4** illustrates an exemplary and simplified signaling exchange for a measurement reporting, assuming a periodic transmission of the reference signals and the report. As apparent therefrom, the gNB configures the UE for the measurement and reporting (e.g. as described above). The UE follows this configuration for the measurement and reporting processing. The gNB transmits the reference signals, and the UE performs the configured measurements on the received reference signals and generates the CSI report, which is then transmitted to the gNB. This can be repeatedly performed, e.g. periodically as configured.

### Transmission Configuration Indicator (TCI) states

The gNB and UE can use a so-called Transmission Configuration Indication (TCI) signaling framework. That means that the beam for a target channel, like a PDSCH, PDCCH, or a target reference signal (such as a channel state information reference signal, CSI-RS) can be indicated from a gNB to a UE by a specific TCI state. The TCI state can be used by the UE for receiving the target channel or target signal. A TCI state defines parameters for defining a quasi-co-location (QCL) relationship between a source reference signal (RS) and the target channel or target signal. Simplifying, when the source signal and target signal are QCLed (Quasi Co-Located), the two signals may have gone through (very) similar channel condition(s), e.g. same place and same antenna, using same spatial filter, etc. Accordingly, by measuring the source reference signal, the UE can appropriately set the reception coefficients (e.g. a spatial filter) and/or tune the reception antenna for the reception of the target channel/signal based on the source reference signal.

In more detail, the similarity of the channel conditions forthe QCL can be influenced by different parameters which two signals might share, including for instance one or more of:
- Doppler Shift
- Doppler Spread
- Average Delay
- Delay Spread
- Spatial Rx parameter

Correspondingly, different types of QCL can be defined in 5G NR systems, such as

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

In frequency range 1 (FR1, below 7.125 GHz) QCL Types A-C, and in frequency range 2 (FR2, above 24.250 GHz) QCL types A-D are applicable. For instance, the QCL Type D for FR2 indicates that a target signal (such as the PDCCH/PDSCH/CSI-RS) is transmitted with the same spatial filter as the source reference signal associated with that TCI State.

For example, a TCI state may e.g. resemble a spatial filter used for transmission and reception to/from a transmission point or TRP (Transmission Reception point).

In Release 17, a unified TCI framework has been introduced, allowing a TCI state to be commonly applied to both DL and UL channels/signals including not only downlink but also target uplink channels, like PUSCH or PUCCH, or target uplink reference signals, like a sounding reference signal (SRS); such a TCI state can be called "joint TCI state". On the other hand, Release 17 supports alternatively the possibility that a UL transmission can have a separate "TCI UL state".

An exemplary TCI state operation involves the following:
- Step 1: The UE is configured with a list of TCI states, e.g. by higher-layer signaling (such as RRC signaling) from a gNB, and possibly depending on the UE capability.
- Step 2: A subset of TCI states, among all the configured TCI states is then activated. For example, the UE receives a medium access control, MAC, control element, CE, message from the gNB for activating a subset of e.g. up to 8 TCI states among the preconfigured TCI states. Each activated TCI state is mapped by the UE to one codepoint (e.g. 3 bits) that can be indicated by the DCI field *"Transmission*

*Configuration Indication".*
- Step 3: One out of the 8 activated TCI states is then actually used by the UE to receive a target channel/signal. For example, the UE receives a DCI signal, which indicates one of the codepoints in the DCI field *"Transmission Configuration Indication".* The UE applies the indicated codepoint to the target channel(s) or target signal(s).

### Configuration of TCI states (TCI Configuration)

According to one exemplary implementation (see e.g. 3GPP TS 38.214, v18.1.0), a UE can be configured by higher layer signaling (e.g. RRC signaling) with a list of up to *M TCI-States.* The number M of configured TCI states depends on the UE capability, and can, for example, be up to 128 TCI states for the PDSCH and up to 64 TCI states for the PDCCH.

The IE *TCI-State,* as described in 3GPP TS 38.331, v18.0.0, section 6.3.2, associates one or two DL reference signals (here SSB and/or CSI-RS) with a corresponding quasi-colocation (QCL) type (for DL or joint DL/UL operation) as follows:

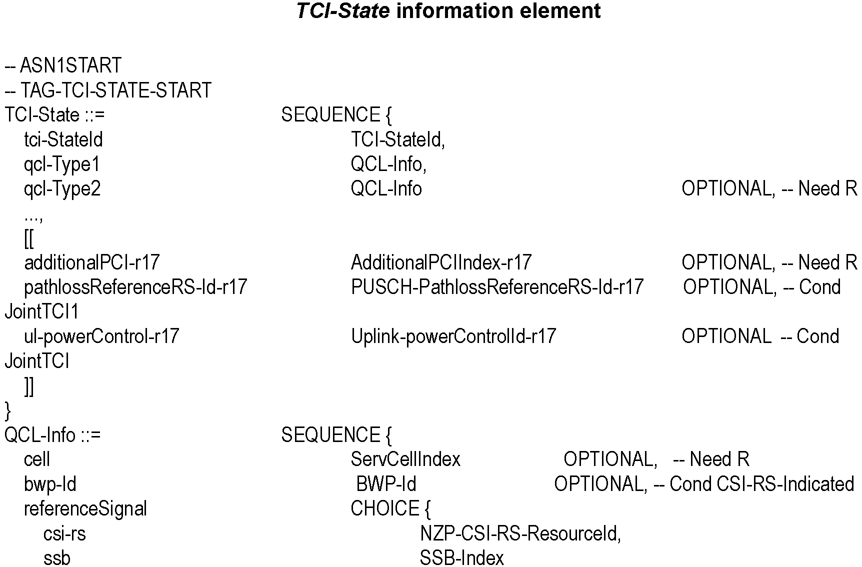

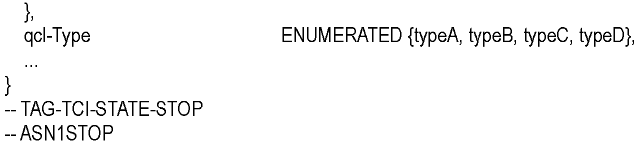

| ***QCL-Info* field descriptions** |
|---|
| ***bwp-ld*** |
| The DL BWP which the RS is located in. If the field is absent, the RS is located in the DL BWP in which the *TCI-State* is applied by the UE. |
| ***cell*** |
| The UE's serving cell in which the *referenceSignal* is configured If the field is absent, the *referencesignal* is configured in the serving cell in which the *TCI-State* is applied by the UE. The RS can be located on a serving cell other than the serving cell for which the *TCI-State* is applied by the UE only if the *qcl-Type* is configured as *typeC* or *typeD.* If the *referenceSignal* is set to *csi-rs* and *unifiedTCI-StateType* is configured, either both *cell* and *bwp-Id* are present or both *cell* and *bwp-Id* are absent. See TS 38.214 [19] clause 5.1.5. |
| ***referenceSignal*** |
| Reference signal with which quasi-collocation information is provided as specified in TS 38.214 [19] clause 5.1.5. |
| ***qcl-Type*** |
| QCL type as specified in TS 38.214 [19] clause 5.1.5. |

| **TCI-State field descriptions** |
|---|
| ***additionalPCI*** |
| Indicates the physical cell IDs (PCI) of the SSBs when *referencesignal* is configured as SSB for both QCL-Type1 and QCL-Type2. In case the *cell* is present, the *additionalPCI* refers to a PCI value configured in the list configured using *additionalPCI-ToAddModList* in the serving cell indicated by the field *cell.* Otherwise, it refers to a PCI value configured in a list *additionalPCI-ToAddModList* configured in the serving cell where the *TCI-State* is applied by the UE. When this field is present the *cell* for *qcl-Type1* and *qcl-Type2* is configured with same value, if present. |
| ***pathlossReferenceRS-ld*** |
| The ID of the reference signal (e.g. a CSI-RS or an SS block) used for PUSCH, PUCCH and SRS path loss estimation. This field refers to an element in the list configured using *pathlossReferenceRSToAddModList* in the serving cell and UL BWP where the TCI State is applied by the UE. |
| ***qcl-Type1, qcl-Type2*** |
| QCL information for the TCI state as specified in TS 38.214 [19] clause 5.1.5. |
| ***tci-Stateld*** |
| ID number of the TCI state. |
| ***ul-Po* werCon *trol*** |
| Configures power control parameters for PUCCH, PUSCH and SRS for this TCI state. The field is present here only if *ul-powerControl* is not configured in any *BWP-Uplink-Dedicated* of this serving cell. This field refers to an element in the list configured using *uplink-PowerControlToAddModList* in the serving cell where the *dl-OrJointTCI-StateToAddModList* is configured |

| **Conditional Presence** | **Explanation** |
|---|---|
| *CSI-RS-Indicated* | This field is mandatory present if *csi-rs* is included and *unifiedTCI-StateType* is not configured This field is optionally present, Need R, if *csi-rs* is included and *unifiedTCI-StateType* is configured Otherwise, it is absent, Need R. |
| *JointTCI* | This field is optionally present, Need R, if this serving cell is configured with *unifiedTCI-StateType* set to '*joint*'. It is absent, Need R, otherwise. |
| *JointTCI1* | This field is mandatory present, if this serving cell is configured with unifiedTCI-StateType set to 'joint'. It is absent, Need R, otherwise. |

For the uplink, the information element *TCI-UL-State* is defined in 3GPP TS 38.331, section 6.3.2.

### 3GPP Release 19 MIMO evolution - UE-initiated levent driven beam management

As presented above, the network may configure periodic or semi-persistent beam reporting or trigger aperiodic beam reporting for the purpose of timely acquiring a best/preferred beam for data / control transmissions. This may result in large uplink reporting overhead and control signaling overhead in addition to reporting latency. Due to the network-configured nature of the beam reporting, the reporting latency caused by the periodic or semi-persistent beam reporting or triggered aperiodic beam reporting may also result in unnecessarily prolonged periods of communication between UE and network using beams that may have degraded unexpectedly. This might even result in beam failures, which then results in that the UE has to perform a beam failure detection and recovery procedure, rather than performing a simple beam switch in a timely manner. This is inefficient, and further, retransmissions of data might be required in addition to the incurred latency of the recovery procedure.

Given that the UE has better and more-timely knowledge of beam quality changes, beam reporting procedures that are initiated by the UE have the potential to lead to more timely beam reports together with reduced reporting overhead and preventing prolonged degraded communication quality.

Consequently, there is a need to specify enhancements to facilitate UE-initiated / event-driven beam management reporting procedures for reducing overhead and/or reporting latency. For such a UE-initiated beam reporting procedure, for the UE to know about the beam-quality change and about when to initiate beam reporting, the UE can perform measurements on DL reference signals. Based on these measurements, the UE can detect whether UE-initiated beam reporting is needed or not.

For example, UE-initiated beam information may be performed upon detection of one or more of the following events:
- Event-1: Quality of the currently used beam for reception/transmission is worse than a certain threshold.
- Event-2: Quality of at least one new beam, such as L1-RSRP, becomes a threshold value better than the current beam.
- Event-3: Quality of a new beam is better than a certain threshold.
- Event-4: Quality of the current beam is worse than a threshold 1, and quality of at least one new beam is better than a threshold 2.
- Event-5: Absolute value of the difference between the quality of the current beam and the quality of at least one new beam is lower than a threshold.
- Event-6: When the current beam is not in the best K>1 beams (out of configured beams for measurement and reporting).
- Event-7: Quality of at least one new beam, such as L1-RSRP, becomes a threshold value better than the RS derived from the activated TCI state with the M-th best quality.
- Event-8: Quality of M>1 new beams, such as L1-RSRP, become a threshold value better than the current beam.
- Event-9: Quality of at least one new beam, such as L1-RSRP, becomes a threshold value better than the configured reference RS (can be SSB or CSI-RS).

It is to be noted that the present disclosure is not limited to above-mentioned exemplary events that may trigger a UE-initiated beam reporting procedure. Only a subset and/or other events may be defined for the UE to initiate the reporting procedure. The events may be specified, for instance, in a standard.

For a UE-initiated beam reporting procedure, the UE needs to find suitable UL channel resources to transmit the beam management report. This can depend on the report size, the tolerated delay, and the intended reliability of the transmission.

Furthermore, unlike other CSI reporting events and other uplink transmission of uplink control information, the transmission of the UE-initiated beam management report is important for the network because this is triggered at the UE most likely by a deterioration of the UL/DL transmission channels.

For example, on beam report transmission procedure for UE-initiated/event-driven beam reporting, Mode A (dynamically scheduling UCI by NW) was supported, including the following steps:
- Step 1, the UE transmits a first PUCCH to request a resource for a second UL channel to carry beam report.
- Step 2: UE detects a DCI indicating a resource for PUSCH channel carrying beam report.
- Step 3: A beam report is transmitted in an UL channel on the PUSCH

It is to be noted that a CSI report initiated by a UE based on the detection of a certain event may be referred to as an event-triggered CSI report or a UE-initiated CSI report. Accordingly, information transmitted in such a report may be denoted event-triggered CSI information or UE-initiated CSI information. Similarly, a CSI report provided by a UE upon reception of a CSI request by a network node may be denoted a network (NW)-initiated CSI report or a NW-requested CSI report. Accordingly, information transmitted in such a CSI report may be denoted NW-initiated CSI information or NW-requested CSI information. Further, it is to be noted that in the present disclosure, the terms NW-requested CSI information and NW-initiated CSI information may also describe the respective CSI report itself. Similarly, the terms event-triggered CSI information and UE-initiated CSI information may also describe the respective CSI report itself.

In the framework of event-triggered CSI reporting, a CSI request field included in the DCI transmitted from a network node to a UE may indicate an aperiodic trigger state. Such an aperiodic trigger state is defined as a list of up to 16 aperiodic CSI Report Configurations (CSI-ReportConfigs). Usually, the number of CSI Report Configurations is much lower than 16. As mentioned above, a CSI request field in a DCI may indicate an aperiodic trigger state including one or more CSI report configurations. The aperiodic trigger state may also be considered an example of a group of CSI report configurations.

The aperiodic trigger state/group of CSI report configurations may be received by a UE via higher-layer signaling (such as RRC signaling). Each CSI report configuration determines the configuration information that the UE needs in order to know how to compile and send the CSI report to the network node. A CSI report configuration may define a reporting frequency, a type of a respective CSI to report, and/or conditions under which CSI reporting should be performed. The CSI request in the DCI may dynamically instruct the UE to follow the relevant configurations included in the group of CSI report configurations indicated by the request and report the requested CSI, which might involve overriding or supplementing the pre-configured settings, depending on the network's immediate needs.

A CSI report configuration in general can determine a type of CSI report, for example periodic, aperiodic, semi-persistent, UE-initiated (event-triggered). It may also configure the quantities to be provided in the report, which could contain channel quality related parameters or signal strength related quantities (L1-RSRP, L1-SINR, etc). It can also indicate the frequency granularity in the frequency domain (subband, wideband, etc.) and other time measurement restrictions on how the reported quantities are to be measured. There may be many types of reporting quantities such as layer indicator, resource indicator, rank indicator, channel quality indicator, precoder indicator etc. In the case of beam reporting, a CSI resource index and/or the SSB resource index along with their RSRP may be among the reported quantities.

Regarding UE-initiated beam information reporting, it was agreed in 3GPP RAN1 to support reporting for Event-2, N ≥ 1 new beams in the report instance where at least one of N reported beam(s) should satisfy the condition of Event-2. A differential reporting format was agreed as such:

| |
|---|
| CRI or SSBRI #1 |
| CRI or SSBRI #2 |
| ... |
| CRI or SSBRI #N |
| L1-RSRP #1 |
| Differential L1-RSRP #2 |
| ... |
| Differential L1-RSRP #N |
| Differential L1-RSRP for current beam, if report mode that current beam is always reported is enabled by RRC |
| Note: Other contents are not precluded |

For the exemplary format illustrated above, differential L1-RSRP #2-#N/current beam is determined based on a difference between measured L1-RSRP corresponding to the CRI/SSBRI #2-#N/current beam and the measured L1-RSRP corresponding to CRI/SSBRI #1. L1-RSRP#1 is the largest measured RSRP among reported ones, and an absolute L1-RSRP.

Additional report contents is being discussed like reporting configuration ID, event ID, cell ID, etc. It is to be noted that the present disclosure is not limited to the format and/or information to be transmitted in a CSI report. For example, a different format and/or different report measures may be configured, defined, specified, or the like.

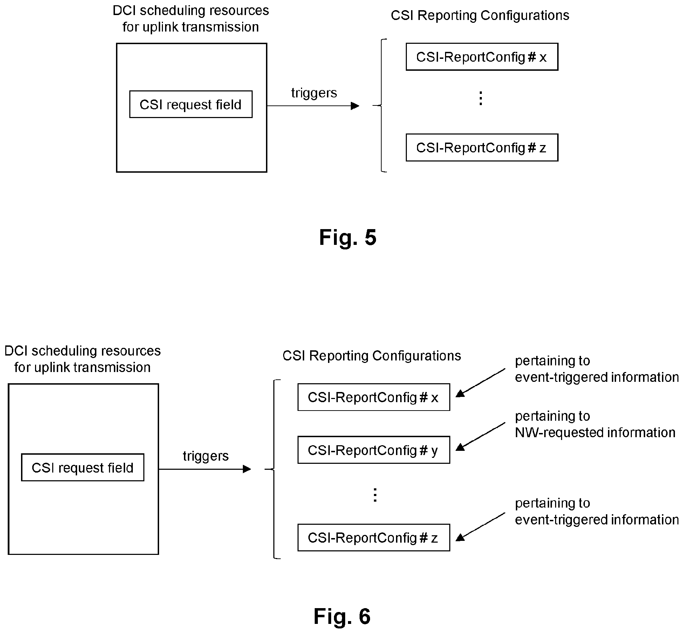

**Fig. 5** illustrates a DCI containing a CSI request field that indicates a group of CSI report configurations. The DCI further indicates resources to be used for transmission of a CSI report. The CSI request field may include a number of bits pointing to or indexing a trigger state which is defined as a group of CSI report configurations the UE has been configured with, e.g. via RRC. In the illustrated example, the UE is configured with at least one group of CSI report configurations (right-hand side). The group of CSI report configurations includes the CSI report configurations #x to #z. The DCI indicates in the CSI request field that a CSI report should be transmitted according to the CSI report configurations included in the group of CSI report configurations indicated by the CSI request.

As mentioned above, a CSI report configuration may define, among other, a reporting frequency, a type of a respective CSI to report, the CSI information to be transmitted, and/or conditions under which the CSI report is to be provided by the UE. That is, in particular, a CSI report configuration may pertain to NW-requested CSI information (e.g. when a reporting frequency is defined) or to event-triggered CSI information (e.g. when conditions under which CSI reporting is to be performed are defined). In other words, a CSI report configuration may indicate event-triggered CSI information or NW-requested CSI information. Such a situation is shown in **Fig. 6****,** which illustrates a DCI containing a CSI request field that indicates a group of CSI report configurations, wherein the indicated group of CSI report configuration includes at CSI report configurations pertaining to event-triggered CSI information (CSI report configurations #x and #z) and a CSI report configuration pertaining to NW-requested CSI information (CSI report configuration #y). It is to be noted that the present disclosure is not limited thereto, and a group of CSI report configurations may include at least one CSI report configuration pertaining to event-triggered CSI information and/or at least one CSI report configuration pertaining to NW-requested CSI information. Such CSI configurations may also be denoted event-triggered CSI report configuration and NW-requested CSI report configuration, respectively, depending on whether respective CSI configuration pertains to event-triggered CSI information or NW-requested CSI information.

An event caused by a downlink (DL) communication channel between a network node and a UE may trigger the UE to compile a corresponding CSI report to be transmitted to the network node. For example, the UE may be configured such that an event that triggers an event-triggered CSI report occur when the UE detects a deterioration of the current transmission channel, and/or the UE determines that there is a communication channel having a higher communication quality compared to the current communication channel. Upon detection of such an event, the UE transmits a resource request for uplink resources in order to be able to transmit the compiled CSI report corresponding to the triggering event. Such a report may be denoted an event-triggered CSI report or a UE-initiated CSI report. Then, the UE may receive scheduling DCI indicating UL resources for transmission of the CSI report.

On the other hand, the network (network node) may also request the UE to transmit CSI information. Such CSI information may be denoted NW-requested CSI information or NW-initiated CSI information and a respective CSI report may be denoted NW-requested CSI report or NW-initiated CSI report.

### Further Improvements

The inventors thus identified the possibility to define improved approaches for NW-requested CSI reporting and event-triggered CSI reporting. The present invention relates to different solutions and variants for such improved CSI reporting. With the approach of the present disclosure, control signaling overhead may be reduced and/or communication latency may be reduced.

Event-triggered CSI reporting, which may be used for beam management procedures will play an important role in 6G communication systems, which are expected to operate in the higher frequency ranges (7-24 GHz, FR2 range, Terahertz range).

### Embodiments

In the following, UEs, base stations, integrated circuits and respective procedures to meet these needs will be described for the new radio access technology envisioned for the 5G mobile communication systems, but which may also be used in previous LTE-based mobile communication systems or future (e.g. 6G) mobile communication systems. In particular, while 3GPP is currently developing Rel. 18 and 19 of the 5G (-Advanced) mobile communication system, 3GPP has already started planning for the next generation, 6G, of communications systems.

Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC etc. (see above background discussion).

The expression **"reception quality"** or **"downlink signal reception quality"** can be broadly understood as referring to a quality of reception at the UE. It thus reflects the quality of reception at the UE side (i.e. downlink), which is determined by measuring suitable downlink reference signals (such as SSB, CSI-RS, DMRS etc.). The thus measured downlink signal reception quality can e.g. be used as a quality measure for the ability of the UE to receive a downlink channel, such as a downlink control channel or downlink data shared channel (PDCCH, PDSCH), e.g. even in case said downlink channel has not (yet) been received. Alternative expressions are e.g. *"downlink channel quality", "downlink quality", "quality of a downlink control channel", "quality of a downlink data channel",* and the like.

The expressions **"beam"** and **"downlink reference signal"** can be used interchangeably, because the beam is a representation of the spatial receive filter used to receive a particular downlink reference signal. For instance, in the present scenario of an improved beam management reporting procedure, it is assumed that communication between the UE and the gNB is performed via beams (be it UL beam or DL beam). Downlink reference signals can be transmitted via narrow beams (e.g. common narrow beam signals are CSI-RS or DMRS) or transmitted via wider beams (e.g. common wide beam signal is SSB). Another expression in this connection is **"spatial direction",** where a beam (and thus the corresponding downlink reference signal) implies a certain "spatial direction" in which the DL RS is received (from viewpoint of UE) or in which the DL is transmitted (from viewpoint of gNB). Thus, the beam management report might be understood as reporting "downlink reference signals", or as reporting "beams", which respectively imply reporting "spatial directions".

The expression **"UE-initiated CSI reporting procedure", "UE-initiated CSI reporting",** or "event-triggered CSI reporting" and similar expressions can be broadly understood as referring to a procedure that is initiated by the UE. For instance, it may involve that, after initiation, the UE transmits a report to the base station.

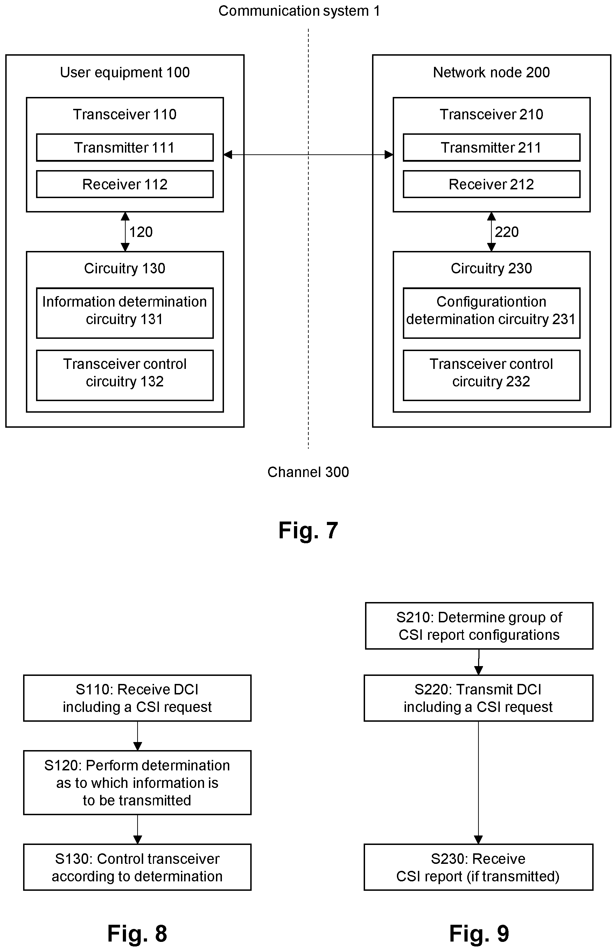

An example of such communication system is illustrated in Fig. 7. The communication system 1 may be a wireless communication system in accordance with the technical specifications of 5G, in particular a NR (New Radio) communication system. However, the present disclosure is not limited to 3GPP NR terrestrial networks (TN) and may also be applied to NTNs (non-terrestrial networks) or other wireless or cellular systems.

**Fig. 7** illustrates a general, simplified and exemplary block diagram of a communication apparatus (which may be exemplarily assumed to be a user equipment (UE) 100 or communication terminal or communication apparatus) and a scheduling device or scheduling node (here exemplarily assumed to be located in a network node 200, e.g. in a LTE eNB (alternatively termed ng-eNB) or the gNB in 5G NR) in the communication system 1. However, in general, a scheduling device may also be a terminal in case of a sidelink connection between two terminals. Moreover, in particular with respect to the use cases of URLLC (ultra reliable low latency communication), eMBB (enhanced mobile broadband), and mMTC (massive machine type communication), the communication apparatus 100 may also be a sensor device, a wearable device, or a connected vehicle, or a controller of an automated machine in an industrial factory.

As illustrated in Fig. 7, the user equipment 100 and the scheduling device or network node 200 (eNB/gNB) may communicate with each other over a (wireless) physical channel 300 respectively using their transceivers 110 (communication apparatus side) and 210 (base station side). Together, the network node 200 and the user equipment 100 may form the communication system 1. The communication system 1 may further include other entities such as those shown in **Fig. 1****,** e.g. a plurality of UEs connected to the base station or a relay node relaying signals to/from the base station from/to one or more UEs, or a plurality of base stations each serving in one or more serving cells.

As illustrated in **Fig. 7****,** the user equipment 100 may comprise a transceiver 110 (e.g. including a transmitter 111 and/or a receiver 112) and circuitry (or processing and/or control circuitry) 130, and the network node 200 may comprise a transceiver 210 (e.g. including a transmitter 211 and/or a receiver 212) and (processing and/or control) circuitry 230.

The term "***transceiver***" refers to a front end including one or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term "*transceiver*" is used for hardware and software components that allow a communication apparatus (or "communication device") to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term ***"circuitry"*** herein refers to any hardware and/or software. For example, the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

In the exemplary user equipment 100, the circuitry 130 may control the transceiver 120, which may include the transmitter 111 and the receiver 112, to receive and/or transmit data. This is illustrated by an arrow 120 which represents schematically an interface between the circuitry 130 and the transceiver 110, over which the control is performed.

In the exemplary network node 200, the circuitry 230 may control the transceiver 210 to receive and/or transmit data. This is illustrated by an arrow 220, which represents schematically an interface between the circuitry 230 and the transceiver 210, over which the control is performed. For example, the circuitry 230 may instruct the transceiver 210 to transmit data.

As mentioned above, references to 5G New Radio communication systems are merely exemplary, and the present invention is applicable to other communication systems including present and future standards. Moreover, short expressions "UE" and "gNB" may be used for the reader's convenience, and descriptions of behavior of a "UE" and "gNB" in the description can more generally be applied to a communication apparatus or a base station. Further, the expressions "UE" and "gNB" before "circuitry", "transmitter", "receiver" and "transceiver" may be used for short to distinguish the transceivers and circuitries of a communication apparatus 100 and a network node 200, without implying any limitation to networks such as 3GPPP NR networks.

As shown in **Fig. 7** (left-hand side), provided is a user equipment (UE) 100. The UE 100 comprises a transceiver 110 and processing circuitry 120. The transceiver 120, in operation, receives Downlink Control Information, DCI, including a Channel State Information, CSI request. The CSI request indicates a group of CSI report configurations.

In other words, the UE 100 receives a DCI, e.g. from a network node 200, wherein said DCI indicates in its CSI request a group of CSI report configurations, according to which CSI reporting is to be performed by the UE 100. Said group of CSI report configurations may be an aperiodic trigger state, as described further above. However, the present disclosure is not limited thereto. For example, a new type could be defined. Such a type could be denoted "UE triggered", "event-triggered", "UE-initiated", or the like. The group of CSI report configurations may include one of more CSI report configurations. That is, the group of CSI report configurations may include only one or more than one CSI report configurations.

The group of CSI report configurations includes an event-triggered CSI report configuration and/or a network (NW)-requested CSI report configuration, wherein the event-triggered CSI report configuration pertains to event-triggered CSI information and the NW-requested CSI report configuration pertains to NW-requested CSI information. An event-triggered CSI report configuration pertains to event-triggered CSI information when the configuration indicates the UE 100 to transmit CSI information that has been triggered by an event. A NW-requested CSI report configuration pertains to NW-requested CSI information when the configuration indicates the UE 100 to transmit CSI information that is requested by the NW.

In other words, each of the CSI report configurations included in the group of CSI report configurations pertains either to event-triggered CSI information or NW-requested CSI information. That is, the group of CSI report configurations may include at least one CSI report configuration pertaining to event-triggered CSI information and/or at least one CSI configuration pertaining to NW-requested CSI information.

The processing circuitry 130, in operation, performs a determination as to which of the event-triggered CSI information and/or the NW-requested CSI information is to be transmitted, based on the CSI request.

In other words, the processing circuitry 130 determines whether event-triggered CSI information is to be transmitted to the network node 200 in a CSI report. This may be the case when there is an event-triggered CSI report configuration included in the group of CSI report configurations. Further, the processing circuitry 130 determines whether NW-requested CSI information is to be transmitted to the network node 200 in a CSI report. This may be the case when the group of CSI configurations indicated by the CSI request includes a NW-requested CSI report configuration.

For example, the UE 100 may determine which of said information is to be transmitted after the CSI request has been received in response to a resource request transmitted to the network node 200. However, the present disclosure is not limited thereto, and the processing circuitry 130 may determine which of the CSI information is to be transmitted in a CSI report without having transmitted a resource request for transmission of an event-triggered CSI information to the network node 200. That is, the processing circuitry 130 may perform the determination after reception of a DCI including the CSI request.

The processing circuitry 130 further controls the transceiver 110 according to the determination.

In other words, if it is determined that any CSI information (event-triggered CSI information and/or NW-requested CSI information) is to be transmitted to the network node 200, the processing circuitry 130 may control the transceiver to transmit a CSI report including at least some or all information determined to be transmitted to the network node 200.

The processing circuitry 130 may include information determination circuitry 131 configured to perform above-described determination of the information to be transmitted and transceiver control circuitry configured to control the transceiver according to the determination. For example, the transceiver control circuitry 132 may control the transceiver 110 to transmit a CSI report on resources indicated by the DCI for transmission of the UL data. On the other hand, if it is determined that no CSI information is to be transmitted to the network node 200, the transceiver control circuitry 132 may not control the transceiver 111 to transmit a CSI report or control the transceiver 111 not to transmit a CSI report.

In correspondence with the above-described UE 100, a method for a UE 100 is provided. As shown in **Fig. 8****,** the method comprises receiving S110 Downlink Control Information, DCI, including a Channel state Information, CSI, request. The CSI request indicates a group of CSI report configurations, and the group of CSI report configurations includes an event-triggered CSI report configuration and/or a network, NW,-requested CSI report configuration. The event-triggered CSI report configuration pertains to event-triggered CSI information and the NW-requested CSI report configuration pertains to NW-requested CSI information. In step S120, a determination is performed as to which of the event-triggered CSI information and/or the NW-requested CSI information is to be transmitted, based on the CSI request. Further, in step S130, the transceiver 111 is controlled according to the determination.

As further shown in Fig. 6 (right-hand side), also provided is a network node 200. The network node 200 comprises processing circuitry 230 and a transceiver 210. The processing circuitry 230, in operation, determines a group of CSI report configurations, wherein the group of CSI report configurations includes an event-triggered CSI report configuration and/or a network, NW,-requested CSI report configuration. The event-triggered CSI report configuration pertains event-triggered CSI information and the NW-requested CSI report configuration pertains to NW-requested CSI information. The transceiver 210, in operation, transmits Downlink Control Information, DCI, including a Channel State Information, CSI, request, wherein the CSI request indicates the group of CSI report configurations.

For example, the DCI may indicate an uplink resource for the UE to transmit a CSI report. In other words, based on the resource request, the network node 200 may obtain a DCI for scheduling UL resources. In other words, the network node 200 may generate the DCI for scheduling UL resources.

In general, a configuration for event-triggered CSI reporting may provide configurations and/or procedures for the behavior of the network node 200 when it receives a resource request. A configuration for event-triggered CSI reporting may be given by a standard, by a configuration received from the core network, or the like.

Such a configuration for event-triggered CSI reporting may, for example, include that the CSI request of the DCI follows the reporting configuration of the event-triggered CSI report. Such a configuration for event-triggered CSI reporting may, for example, include resources that may be scheduled if a resource request is received as transmission request (e.g. in Mode A).

For example, the DCI may indicate a resource for PUSCH channel carrying CSI report.

Furthermore, in correspondence with the above-described network node 200, a method to be performed by a network node 200 is provided. As shown in **Fig. 9****,** the method comprises determining S210 a group of CSI report configurations, wherein the group of CSI report configurations includes an event-triggered CSI report configuration and/or a network, NW,4-requested CSI report configuration. The event-triggered CSI report configuration pertains event-triggered CSI information and the NW-requested CSI report configuration pertains to NW-requested CSI information. In step S220, Downlink Control Information, DCI, including a Channel State Information, CSI, request is transmitted, wherein the CSI request indicates the group of CSI report configurations.

Moreover, the method may include an addition step of receiving S230 a CSI report in resources indicated in the DCI.

In the further description, the details and embodiments apply to each of the user equipment 100, the network node 200 and the methods unless explicit statement or context indicates otherwise. Moreover, it is noted that any of the steps described below may be included as code instructions in a program, which may be executed by one or more processors (e.g. the processing circuitry 130 and/or the processing circuitry 230).

With the described approach of the present disclosure, the UE 100 may utilize the legacy CSI configuration framework (CSI-ReportConfig), rendering the requirement for dedicated CSI trigger stated unnecessary. Further, a lower latency might be achieved since the UE 100 may be able to report NW-requested CSI information and event-triggered CSI information at the same time/simultaneously. In addition, the network may control a priority between NW-requested CSI information and event-triggered CSI information by selecting a group of CSI report configurations and, optionally, priority configurations.

As described above, based on the CSI request field in the received DCI, the UE 100 determines which event-triggered CSI information and/or which NW-requested CSI information is to be included in a CSI report to be transmitted to a network node 200 on scheduled uplink resources. Said network resources may be indicated in the DCI received from the network node 200, which, as detailed above, includes the DCI request field indicating a group of DCI report configurations.

In other words, the CSI request field triggers reporting of CSI information corresponding to the indicated group of CSI report configurations. In this respect, it is noted that in case of event-triggered information to be transmitted, a CSI report may be considered to correspond to a configuration if the information indicated in the configuration to be carried by the report matches the format of the report that is being sent. Note that in this case the CSI report may be compiled before reception of the DCI from the network node 200, whereas in a case of NW-requested information to be transmitted, the UE 100 compiles the corresponding CSI report after reception of the DCI.

As detailed above, a CSI report configuration in the group of CSI report configuration pertains either to NW-requested CSI information or event-triggered CSI information, and the UE 100 includes the NW-requested CSI information corresponding to the CSI report configuration(s) included in the group of CSI report configurations, which is indicated in the CSI request field.

In other words, the processing circuitry 130, in operation, determines that the NW-requested CSI information is to be transmitted if the group of CSI report configurations includes the NW-requested CSI report configuration pertaining to said NW-requested CSI information.

That is, if the group of CSI report configurations indicated in the CSI request field of the DCI, the UE 100 compiles the respective CSI report to be transmitted to the network node 200. It goes without saying that, if the group of CSI report configurations does not include any CSI report configuration pertaining to NW-requested CSI information, it is determined that no NW-requested CSI information is to be transmitted to the network node 200. Similarly, when more than one CSI report configurations included in the indicated group of CSI report configurations, respective multiple pieces of NW-requested CSI information is determined to be transmitted.

In other words, the processing circuitry 130, in operation, determines that no NW-requested CSI information is to be transmitted if there is no NW-requested CSI report configuration included in the group of CSI configurations.

Regarding the event-triggered CSI information, the processing circuitry 130, in operation, determines that no event-triggered CSI information is to be transmitted (i) if the UE 100 did not transmit a resource request for event-triggered CSI information, (ii) if the UE 100 did transmit a resource request for event-triggered CSI information and the group of CSI report configurations does not include an event-triggered CSI report configuration matching the event-triggered CSI information of the resource request, and/or (iii) if a time period from a transmission of a resource request for event-triggered CSI information to the reception of the DCI exceeds a threshold.

In other words, there may be one or more conditions for determining that event-triggered CSI information is not to be transmitted. In view thereof, the detection of an event that triggers an event-triggered CSI report, the compilation of the CSI report and the transmission of a resource request will be described first.

That is, the processing circuitry 130 may, in operation, detect an event that triggers transmission of event-triggered CSI information; and the transceiver 110, in operation, transmits a resource request for transmission of said event-triggered CSI information, and receives the DCI in response to transmission of the resource request.

At the UE 100 side, a CSI report can be triggered by events that the UE 100 detects autonomously, based on predefined conditions, for example. These events may be detected when the UE 100 observes changes in its radio environment or based on specific criteria that may be set by the network. One trigger may be a significant change in radio conditions, such as a sudden drop in Signal-to-Noise Ratio (SNR) or Reference Signal Received Power (RSRP), which indicates that the current channel quality has deteriorated. Mobility events can also trigger CSI reports, such as when the UE moves into a different coverage area, causing changes in path loss or interference levels. For instance, if a UE moves behind a building or enters a tunnel, the change in signal reflections or blockages may prompt a CSI report.

When the processing circuitry 130 has detected an event that triggers CSI reporting, the UE 100 determines the information intended to be transmitted to the network, compiles a respective report, and transmits a resources request to the network node 200 in order to be scheduled resources for transmission of the CSI report. In response to the resource request, the UE 100 receives the DCI from the network node 100 that includes the CSI request field indicating the group of CSI report configurations, based upon which the processing circuitry 130 determines which information is to be transmitted to the network node 200. Further, the DCI indicates resources to be used for transmission of respective resources.

In this respect, it is to be noted that the processing circuitry 130 may detect a plurality of events that trigger a CSI report at the same time and, accordingly, the resource request transmitted may be a resource request requesting resources for transmission of respective plurality of event-triggered CSI information.

As mentioned above, the UE 100 may determine that no event-triggered CSI information is to be transmitted. For instance, when the UE 100 has not detected an event that triggers transmission of a CSI request, and, accordingly has not transmitted a resource request for transmission of respective event-triggered CSI information, the processing circuitry 130 determines that no event-triggered CSI information is to be transmitted. Hence, even if the group of CSI report configurations indicated by the CSI request included in the DCI received from the network node 200 includes a CSI report configuration pertaining to event-triggered CSI information, the processing circuitry 130 determines that no event-triggered CSI information is to be transmitted if a resource request for said information has not been transmitted beforehand by the UE 100.

In addition or alternatively, the processing circuitry 130 may determine that no event-triggered CSI information is to be transmitted if the UE 100 did transmit a resource request for transmission of event-triggered CSI information, but the group of CSI report configurations does not include an event-triggered CSI report configuration matching said event-triggered CSI information. In other words, if the UE 100 has certain data to be transmitted, but the network node 200 indicates that said data is not to be transmitted (by indicating a group of CSI report configurations not including an event-triggered CSI report configuration matching said data), the UE 100 determines that the event-triggered CSI information is not to be transmitted.

As described further above, a CSI report configuration provides the UE 100 with the necessary information to perform CSI reporting. In particular, a CSI report configuration may specify or indicate what CSI metrics/CSI information are to be reported. Event-triggered CSI information may be considered to match an event-triggered CSI report configuration if the event-triggered CSI report configuration indicates that said event-triggered CSI information is to be reported. In general, CSI information may be considered to match a CSI report configuration if the CSI report configuration indicates that said CSI information is to be transmitted. In this respect, it is to be noted that the CSI report configuration is not required to indicate the CSI information directly, but the CSI report configuration may include information allowing the UE 100 to determine the CSI information to be reported.

For example, if an event triggered the UE 100 to transmit a report that contains beam information about 5 new beams that are of better quality than the beam that the UE 100 is currently using for transmission and reception, but none of the event-triggered CSI report configurations pointed out by the CSI request field, indicates to the UE 100 to include information about 5 new beams (for example only indicate the RSRP level of the current beam), then the event-triggered CSI report configurations indicated by the CSI request field do not match the CSI information that the UE 100 is requesting to send to the NW.

In addition or alternatively, the processing circuitry 130 may determine that event-triggered CSI information is not to be transmitted if a time period from a transmission of a resource request for said event-triggered CSI information to the reception of the DCI exceeds a threshold. That is, in this case, the processing circuitry 130 has detected an event that triggers transmission of respective event-triggered CSI information, the processing circuitry 130 has compiled a respective CSI report and caused the transceiver 110 to transmit a resource request for said event-triggered CSI information. Upon transmission of the resource request, the processing circuitry 130 may start a timer having a certain runtime corresponding to above-mentioned period of time. In the case where the UE 100 has not received the DCI including the CSI request from the network node 200 when the timer has expired, the processing circuitry 130 determines that the event-triggered CSI information is not to be transmitted, even if a DCI including a CSI request requesting said information is received at a later timing. In this respect, it is to be noted that the present disclosure is not limited to the implementation, wherein a timer is started upon transmission of the resource request. The determination of whether or not said period of time has passed after transmission of the resource request may be performed in a different manner, e.g. by utilizing a different timer, by measuring a time difference between transmission of the resource request and reception of the DCI and comparing said difference to a threshold, or the like.

As detailed above. The processing circuitry 130 determines whether NW-requested CSI information and/or event-triggered CSI information is to be transmitted. According to the determination, the processing circuitry 130 controls the transceiver 110.

That is, the processing circuitry 130 may, in operation, controls the transceiver not to transmit a CSI report if it is determined that no NW-requested CSI information and no event-triggered CSI information is to be transmitted. Further, the processing circuitry 130 may, in operation, control the transceiver to transmit a CSI report if it is determined that at least one of NW-requested CSI information and event-triggered CSI information is to be transmitted.

Hence, the CSI report to be transmitted may include NW-requested CSI information and/or event-triggered CSI information. Accordingly, the UE 100 can report NW-requested and event-triggered CSI information using a single DCI. This approach may reduce control overhead and reporting latency.

The above-described general concept of the present disclosure and further aspects of the disclosure will be described in more detail in the framework of the following embodiments and variations.

### Embodiment 1

As described above, the UE 100 may detect multiple events that trigger the transmission of respective CSI information and, accordingly, transmit a resource request requesting resources for transmission of said multiple pieces of event-triggered CSI information in a resource request. If one or more of said pieces of event-triggered CSI information matches a CSI report configuration included in the group of CSI report configurations indicated in the CSI request included in the DCI received by the UE 100, the UE 100 may include only one of the event-triggered CSI information in the CSI report that is to be transmitted to the network. That is, when multiple events are detected or an event that triggers multiple CSI reports is detected, the UE 100 may compile said event-triggered CSI reports and, upon reception of the DCI including the CSI request, determine that only of said reports is to be transmitted to the network.

In other words, the transceiver 110, in operation, transmits the resource request for transmission of a plurality of event-triggered CSI information. The processing circuitry 130, in operation, determines only one event triggered CSI information to be transmitted, according to an event-triggered CSI report configuration included in the group of CSI report configurations.

The selection of the event-triggered CSI report/event-triggered CSI information to be transmitted to the network may be performed based on a priority rule or priority order associated with the event/the event-triggered CSI report.

That is, the processing circuitry 130 may, in operation, determines the only one event-triggered CSI information according to a first priority rule of event-triggered CSI report configurations included in the group of CSI report configurations.

The first priority rule may be predetermined, pre-obtained, configured, or the like. The priority rule may be a certain ordering of the event-triggered CSI report configurations included in the group of CSI report configurations. For example, the ordering may be based on CSI report configuration identification numbers. In other words, the CSI report configuration IDs may be considered to represent a priority order. Alternatively, the first priority rule may be a predetermined, pre-obtained, configured (or the like) rule for dynamic determination of the priority of the event-triggered CSI report configurations.

For example, the processing circuitry 130 may select, from the event-triggered CSI report configurations included in the group of CSI report configurations, the CSI report configuration having the highest priority, and determine that only the event-triggered CSI information corresponding to said event-triggered CSI report configuration is to be transmitted to the network. For example, certain type of events can have a higher priority or importance than others due to how critical they are in preventing a link failure. For example, an event triggering the UE 100 to send new beam information could provide more critical information than an event triggering the UE 100 to just send current beam RSRP only. The UE 100 can be configured or specified to determine the priority of such events. It is to be noted that this selection is performed from among the pieces event-triggered CSI information. If NW-request CSI information is to be transmitted to the network, due to a CSI request configuration included in the group of CSI request configurations indicated in the CSI request pertaining to NW-requested CSI information, said NW-requested CSI information is determined to be transmitted to the network.

By determining that only one event-triggered CSI report (from among multiple event-triggered CSI reports) is to be transmitted to the network, the network may be provided with sufficient information on the channel quality, for example. For instance, the event-triggered CSI information may contain beam measurements. In this case, one piece of event-triggered CSI information may be enough for the network to perform beam management operations.

### Embodiment 2

In a different implementation of the UE's 100 behavior in the case where multiple event-triggered CSI reports are to be transmitted, in addition or as an alternative to the aspects described in embodiment 1, the transceiver 110 may, in operation, transmits the resource request for transmission of a plurality of event-triggered CSI information. The processing circuitry 130 may, in operation, determine a subset of event-triggered CSI information to be transmitted, according to event-triggered CSI report configurations included in the group of CSI report configurations.

In other words, if the UE 100 requested resources for multiple event-triggered CSI reports, and if one or more of these event-triggered CSI reports match a CSI report configuration pertaining to event-triggered CSI information, the UE 100 includes a subset of these event-triggered CSI reports in the CSI information that is to be sent to the network. In this respect, it is to be noted that embodiment 1 may be considered to represent a special case of embodiment 2, wherein the number of elements of the determined subset is set to one. However, said maximum number of elements in the subset may be larger than one.

In order to determine the event-triggered CSI reports to be transmitted, the processing circuitry 130 may, in operation, determine the subset of event-triggered CSI information according to (i) whether or not an event-triggered CSI information is included in the plurality of event-triggered CSI information of the resource request and an event-triggered CSI report configuration included in the group of CSI report configurations matches said event-triggered CSI information, and/or (ii) a second priority rule of event-triggered CSI report configurations included in the group of CSI report configurations.

Event-triggered CSI information may be considered to match an event-triggered CSI report configuration if the event-triggered CSI report configuration indicates that said event-triggered CSI information is to be reported.

In other words, the UE 100 may first select, from the event-triggered CSI reports, the event-triggered CSI reports that match a CSI report configuration included in the group of CSI report configurations indicated in the CSI request that is included in the received DCI. Then, the UE may select, from said event-triggered CSI reports, one or more event-triggered CSI reports based on a priority (second priority rule). For example, each event or each CSI report configuration may be associated with a certain priority level. Alternatively, the priorities may be determined dynamically based on a predetermined, pre-obtained, configured (or the like) second priority rule, in a similar manner as described for the first priority rule in the framework of embodiment 1. It is to be noted that the first priority rule may be the same or different from the second priority rule. That is, for example, the selection may be performed following an ordering of the event-triggered CSI reports based on respective CSI report configuration IDs.

The UE 100 may apply a maximum number of event-triggered CSI reports and only include CSI reports according to the second priority rule up to said maximum number. As detailed above, a maximum number of one may be considered to correspond to an implementation of embodiment 1. However, the present disclosure is not limited thereto, and the maximum number may be two, three, or any other number larger than one. The maximum number may be predetermined, pre-obtained, configured, indicated, or the like.

It is to be noted that NW-requested CSI reports may be determined to be transmitted independently from the determination for the event-triggered CSI reports, if respective CSI report configurations are included in the group of CSI report configurations indicated by the CSI request.

With the approach of embodiment 2, multiple event-triggered CSI information may be transmitted to the network, which might be beneficial since said CSI reports might be triggered by events of different nature. For example, one event can be related to mobility operation and other events can be monitoring new beams whose quality might become much better than the currently used transmission/reception beam. Moreover the reports might contain different types of information that might assist the network in performing transmission link adaptation efficiently and in a timely manner.

### Variations

In the following, variations of the approach of the present disclosure will be described. Said variations may be applied to the general concept of the present disclosure as well embodiments 1 and 2.

### Variation 1

In a first variation of the generic approach, embodiment 1 and/or embodiment 2 of the present disclosure, the UE 100 may multiplex, when present, the NW-requested CSI information and the event-triggered CSI information into one report to be transmitted to the network. That is, when it is determined that NW-requested CSI information as well as event-triggered CSI information is to be transmitted to the network, said pieces of information may be multiplexed and transmitted in one CSI report.

In this case, the UE 100 may truncate the CSI information based on the allocated resources indicated in the DCI. For example, if the allocated resources are not sufficient for transmission of all CSI information (NW-requested and event-triggered), the UE 100 may determine that certain CSI information is truncated and omitted from transmission the CSI report. Said truncation may be performed according to a certain priority configuration.

In other words, the DCI indicates resources for transmission of a CSI report. The processing circuitry 130 may, in operation, if it is determined that event-triggered CSI information and NW-requested CSI information is to be transmitted, truncate the event-triggered CSI information and/or NW-requested CSI information, according to a priority configuration based on the indicated resources to obtain truncated information. In particular, the priority configuration may indicate that event-triggered CSI information is to be truncated first or that NW-requested CSI information is to be truncated first. The transceiver 110, in operation, transmits a CSI report indicating the truncated information.

The truncated information is the event-triggered CSI information and/or NW-requested CSI information after truncation, i.e. after omission of certain information. That is, for example, when event-triggered CSI information and NW-requested CSI information is determined to be transmitted and, for instance, the event-triggered CSI information is truncated, the CSI report includes the event-triggered CSI information after truncation and the NW-requested CSI information. Similarly, when event-triggered CSI information and NW-requested CSI information is determined to be transmitted and, for instance, the NW-requested CSI information is truncated, the CSI report includes the NW-requested CSI information after truncation and the event-triggered CSI information.

That is, based on the priority configuration, the UE 100 may determine that either NW-requested CSI information or event-triggered CSI information is to be truncated. Truncation in this respect includes the omission of the entire CSI information/report or a part of the CSI information/report. With this, the data amount to be transmitted in the CSI report may be adapted to as to allow for transmission in the scheduled resources indicated in the DCI.

The priority configuration may, for example, be predetermined, pre-obtained, configured, set in a standard, indicated, or the like.

Although the truncation is not limited to any specific implementation, the UE 100 may truncate event-triggered CSI information first when only one piece of event-triggered CSI information is determined to be transmitted, even though the UE 100 has transmitted a resource request for multiple event-triggered CSI information and the group of CSI report configurations indicated in the CSI request includes multiple CSI report configurations pertaining to event-triggered CSI information (i.e. embodiment 1). In embodiment 1, the NW requested CSI information has a higher priority than the event-triggered CSI information (only one piece of event-triggered CSI information is determined to be transmitted). In this case, event-triggered CSI information may be truncated first if not enough resources are scheduled for uplink transmission of CSI information.

Truncation might be useful when the resources are limited, for example, due to a congested channel. In view thereof, NW-requested CSI information may be important for the network to perform operations achieving a higher throughput, whereas event-triggered CSI information may not be of critical nature (such information may pertain to beam quality tracking, for example).

Conversely, when applying variation 1 to embodiment 2, NW-requested CSI information may be truncated first. According to embodiment 2, a subset of event-triggered CSI information is determined to be transmitted to the network (from among the event-triggered CSI information pertaining to the event-triggered CSI report configurations included in the group of CSI report configurations). Although NW-requested CSI information is determined to be transmitted (if requested), priority is laid on the transmission of event-triggered CSI information. Therefore, when applying variation 1 to embodiment 2, the NW-requested CSI information is truncated first when the scheduled resources are not sufficient.

Event-triggered CSI information might, in the context of beam management, prevent the UE 100 from experiencing beam failure, where a beam failure recovery procedure may incur a lot of overhead and delay. Therefore, truncation of NW-requested CSI information may be useful even in the case where resources are limited, e.g. due to a congested cell.

Although specific applications of variation 1 to embodiment 1 and 2 are described above, it is to be noted that the present disclosure is not limited thereto, and the UE 100 may truncate NW-requested CSI information first when applying variation 1 to embodiment 1 and, similarly, may truncate event-triggered CSI information first when applying variation 1 to embodiment 2.

### Variation 2

As described above in the framework of the embodiments and variation 1, the UE 100 may have requested resources for event-triggered CSI information, but was not able to/did not transmit said event-triggered CSI information. Reasons for not transmitting the event-triggered CSI information may include the following cases, without being limited thereto.
- The UE 100 transmitted a resource request for transmission of event-triggered CSI information and received a DCI including a CSI request, wherein, however, the CSI request indicated a group of CSI report configurations that did not include a CSI report configuration matching the event-triggered CSI information of the resource request. As described above, in this case, it may be determined that the event-triggered CSI information is not to be transmitted.
- The event-triggered CSI information was truncated/omitted (e.g. as in variation 1), for example due to limited resources indicated for transmission of CSI information in the DCI.

In this case, i.e. when certain event-triggered CSI information was not transmitted on the scheduled resources, the UE 100 may transmit a second resource request or retransmit the resource request.

That is, the processing circuitry 130 may, in operation, if one or more event-triggered CSI information indicated in the resource request is not transmitted in the CSI report, determine whether or not a second resource request is to be transmitted. The transceiver 110 may, in operation, transmit the second resource request, if it is determined that the second resource request is to be transmitted.

In other words, when a CSI report is transmitted in response to reception of a DCI including a CSI request, but said CSI report did not include event-triggered CSI information, for which a resource request has been transmitted beforehand, the UE 100 may retransmit the resource request. Said resource request may be substantially identical to the first resource request, or may be different to the first resource request. In view thereof, the (re-)transmitted resource request is denoted second resource request in this disclosure. Accordingly,

For example, the second resource request may be a request for transmission of all event-triggered CSI information that were not transmitted in a DCI report.

In another example, the second resource request may be a request for transmission of a subset of the event-triggered CSI information that was not transmitted in a DCI report. Said subset may be determined based on a (third) priority rule. The third priority rule may be equal to or different from the first and/or second priority rules mentioned further above. For example, the first priority rule may be predetermined, pre-obtained, configured, or indicated, and represents a rule, according to which the UE 100 may select the subset from the event-triggered CSI information not transmitted. The third priority rule may be reflected by an order according to priorities of respective events. Further, the size of the subset may be a parameter that is specified or configurable. For example, a request may be transmitted for only one piece of event-triggered CSI information.

In other words, the processing circuitry 130 may, in operation, determine a subset of the one or more event-triggered CSI information not transmitted, based on a third priority rule. The second resource request may be for transmission of said subset of the one or more event-triggered CSI information.

With this approach, if the events are of a same or similar nature, and, accordingly, the CSI information to be reported may be similar, a retransmission of only a subset of event-triggered CSI information may be sufficient for the network to perform respective operation. Therefore, with the approach of this example, the network may be provided with sufficient information while at the same time the control overhead may be kept at a minimum.

In another example, the UE may determine whether a second resource request is to be transmitted depending on a time period from transmission of the first resource request. That is, when the UE 100 first transmits a resource request for an event-triggered CSI report, the UE 100 may start a timer to keep track of the validity of the respective CSI report. If the UE 100 could not include the event-triggered CSI information in the (first) CSI report transmitted to the network node 200, and the timer did not expire, the UE 100 may (re-)transmit the second resource request to the network for the event-triggered CSI report not transmitted in the first CSI report. Accordingly, when the timer has expired, the UE 100 may not transmit the second resource request. It is to be noted that a time period may be set for each of the multiple resource requests separately.

In other words, the processing circuitry 130 may, in operation, determine that the second resource request is not to be transmitted if a time period from a transmission of the resource request to the reception of the DCI exceeds a second threshold. The processing circuitry 130 may further determine that the second resource request is to be transmitted if the time period does not exceed the second threshold.

It is to be noted that the present disclosure is not limited to the implementation using a timer. Any other suitable means may be utilized for determination of the validity of the event-triggered CSI information, as already described further above.

It is to be noted that this example using the time period for determination of whether or not the second resource request is to be transmitted may be combined with the other examples given for variation 2, i.e. the selection of all/a subset of/only one event-triggered CSI information not transmitted for the second resource request.

With this approach, it may be determined whether the event-triggered CSI information has expired and, hence, transmission thereof is obsolete. Therefore, the control overhead may be further reduced.

### Specific exemplary implementations

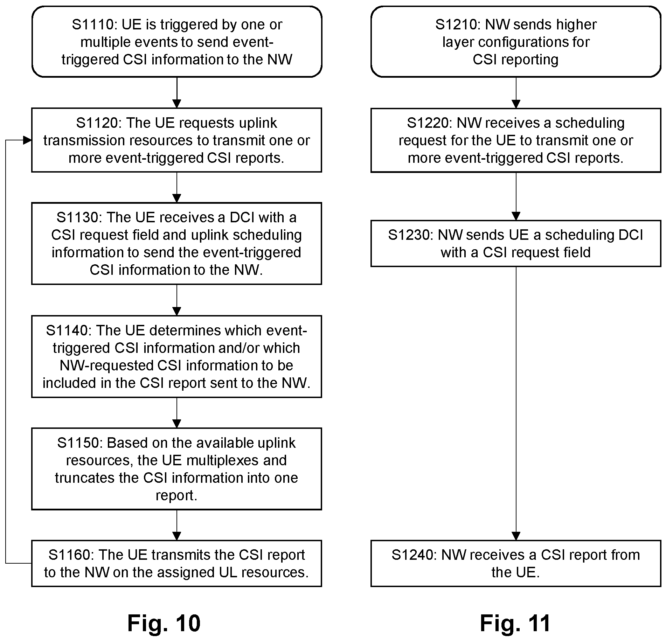

Fig. 10 provides a flowchart for an exemplary implementation of a method for a UE 100.

In step S1110, the UE is triggered by one or multiple events to send event-triggered CSI information to the network. For example, a processing circuitry 130 of the UE 100 may detect an event that triggers the UE 100 to send the CSI information. For example, the UE 100 may be configured with certain conditions to be fulfilled for a respective event to be detected. For example, the processing circuitry 130 may control a transceiver 110 and monitor the quality of a communication channel with a network node.

When an event triggers a CSI report, the UE requests uplink resources to transmit one or more event-triggered CSI reports in step S1120. For example, the UE 100 compiles the CSI reports and transmits a resource request to the network node 200. In step S1130, the UE 100 received a DCI including a CSI request field indicating a group of CSI report configurations. Said group contains one or more CSI report configurations, wherein each of which pertains either to NW-requested CSI information or event-triggered CSI information.

In step S1140, the UE 100 determines which event-triggered CSI information and/or which NW-requested CSI information is to be included in a CSI report to be sent to the network node. In this step, the UE 100 may apply any approach described above in the framework of embodiments and/or variations. If NW-requested CSI information is determined to be transmitted, the UE 100 compiles respective CSI report(s).

Based on the available uplink resources indicated in the DCI, the UE 100 multiplexes and truncates the CSI information to be transmitted into one CSI report in step S1150. In this step, some or all aspects described above in the framework of embodiment and variations may be applied. In particular, it is noted that the truncation is not necessarily performed.

In step S1160, the UE 100 transmits the determined CSI report to the network node 200 on the assigned uplink resources.

Fig. **11** provides a flowchart for an exemplary implementation of method for a network node 200.

In step S1210, the network node 200 transmits higher layer configurations for CSI reporting to the UE 100. For example, the UE 100 may be configured with one or more groups of CSI report configurations. Each group of CSI report configurations may include one or more CSI report configurations, each pertaining either to NW-requested CSI information or event-triggered CSI information.

In step S1220, the network node 200 receives a resource request (scheduling request) for transmission of one or more event-triggered CSI information. Subsequently, the network node 200 determines a group of CSI report configurations to be used for CSI reporting and resources to be scheduled for transmission of a CSI report. Subsequently, the network node 200 transmits a DCI indicating the scheduled resources and including a DCI request indicating the determined group of DCI report configurations to the UE 100.

Subsequently, the network node 200 receives a CSI report in step S1240, carrying event-triggered CSI information and/or NW-requested CSI information. It is to be noted that, in a case where the UE 100 determines that no event-triggered CSI information and no NW-requested CSI information is to be transmitted to the network node 200, the network node 200 may not receive a CSI report in step S1240. In this sense, step S1240 is optional.

Further, as described in the framework of variation 2 above, the UE 100 may determine to retransmit the resource request or to transmit a second resource request.

### Terminology

In the following, UEs, base stations, and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### NR Random Access

Random access is a procedure that is performed when a UE establishes a connection with the network, e.g. an initial connection or a connection after a period of inactivity. A logical channel for RACH is called RACH (random access channel), and the corresponding physical random access channel is abbreviated as PRACH. There are different RACH procedures depending on the use case.

RACH in NR includes the concept of RACH occasions, where a plurality of preambles (e.g. 64 preambles) are reused by different frequency and time resources called "RACH occasions" (RO). By a configured mapping between SSBs and ROs, a gNB can determine the SSB to which a UE is associated or linked to. For instance, when beam sweeping is performed, different SSBs are transmitted in different directions and at different timings.

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

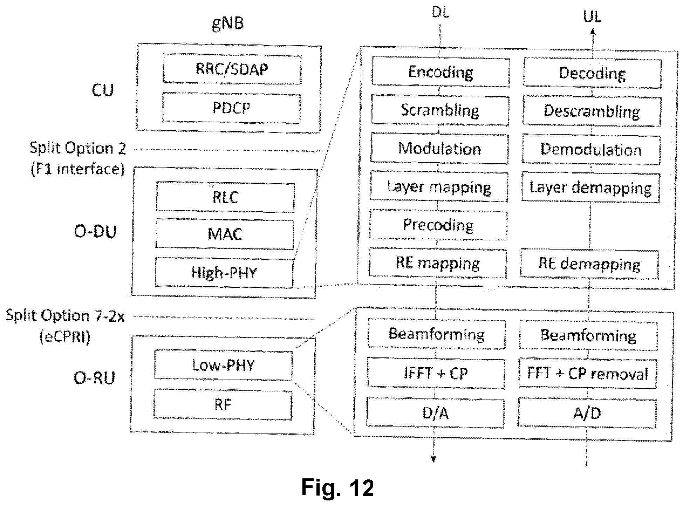

**Fig. 12** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD - Subband non-overlapping full duplex

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### User Equipment

A terminal or user terminal or user device or mobile station or mobile node is referred to in the LTE and NR as a user equipment (UE). This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Ambient IoT

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

### Further variations

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (loT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, provided is a user equipment, UE, comprising a transceiver which, in operation, receives Downlink Control Information, DCI, including a Channel State Information, CSI, request, wherein the CSI request indicates a group of CSI report configurations, and the group of CSI report configurations includes an event-triggered CSI report configuration and/or a network, NW,-requested CSI report configuration, wherein the event-triggered CSI report configuration pertains to event-triggered CSI information and the NW-requested CSI report configuration pertains to NW-requested CSI information; and processing circuitry which, in operation, performs a determination as to which of the event-triggered CSI information and/or the NW-requested CSI information is to be transmitted, based on the CSI request, wherein the processing circuitry controls the transceiver according to the determination.

In an embodiment, the processing circuitry, in operation, determines that the NW-requested CSI information is to be transmitted if the group of CSI report configurations includes the NW-requested CSI report configuration pertaining to said NW-requested CSI information.

In an embodiment, the processing circuitry, in operation, determines that no NW-requested CSI information is to be transmitted if there is no NW-requested CSI report configuration included in the group of CSI configurations.

In an embodiment, the processing circuitry, in operation, determines that no event-triggered CSI information is to be transmitted (i) if the UE did not transmit a resource request for event-triggered CSI information, (ii) if the UE did transmit a resource request for event-triggered CSI information and the group of CSI report configurations does not include an event-triggered CSI report configuration matching the event-triggered CSI information of the resource request, and/or (iii) if a time period from a transmission of a resource request for event-triggered CSI information to the reception of the DCI exceeds a threshold.

In an embodiment, the processing circuitry, in operation, controls the transceiver not to transmit a CSI report if it is determined that no NW-requested CSI information and no event-triggered CSI information is to be transmitted; and the processing circuitry, in operation, controls the transceiver to transmit a CSI report if it is determined that at least one of NW-requested CSI information and event-triggered CSI information is to be transmitted.

In an embodiment, the processing circuitry, in operation, detects an event that triggers transmission of event-triggered CSI information; and the transceiver, in operation, transmits a resource request for transmission of said event-triggered CSI information, and receives the DCI in response to transmission of the resource request.

In an embodiment, the transceiver, in operation, transmits the resource request for transmission of a plurality of event-triggered CSI information; and the processing circuitry, in operation, determines only one event triggered CSI information to be transmitted, according to an event-triggered CSI report configuration included in the group of CSI report configurations. In an embodiment, the processing circuitry determines the only one event-triggered CSI information according to a first priority rule of event-triggered CSI report configurations included in the group of CSI report configurations.

In an embodiment, the transceiver, in operation, transmits the resource request for transmission of a plurality of event-triggered CSI information; and the processing circuitry, in operation, determines a subset of event-triggered CSI information to be transmitted, according to event-triggered CSI report configurations included in the group of CSI report configurations.

In an embodiment, the processing circuitry, in operation, determines the subset of event-triggered CSI information according to (i) whether or not an event-triggered CSI information is included in the plurality of event-triggered CSI information of the resource request and an event-triggered CSI report configuration included in the group of CSI report configurations matches said event-triggered CSI information, and/or (ii) a second priority rule of event-triggered CSI report configurations included in the group of CSI report configurations.

In an embodiment, the DCI indicates resources for transmission of a CSI report; the processing circuitry, in operation, if it is determined that event-triggered CSI information and NW-requested CSI information is to be transmitted, truncates the event-triggered CSI information and/or NW-requested CSI information, according to a priority configuration based on the indicated resources to obtain truncated information; the priority configuration indicates that event-triggered CSI information is to be truncated first or that NW-requested CSI information is to be truncated first; and the transceiver, in operation, transmits a CSI report indicating the truncated information.

In an embodiment, the processing circuitry, in operation, if one or more event-triggered CSI information indicated in the resource request is not transmitted in the CSI report, determines whether or not a second resource request is to be transmitted; and the transceiver, in operation, transmits the second resource request, if it is determined that the second resource request is to be transmitted.

In an embodiment, the processing circuitry, in operation, determines a subset of the one or more event-triggered CSI information not transmitted, based on a third priority rule; and the second resource request is for transmission of said subset of the one or more event-triggered CSI information.

In an embodiment, the processing circuitry, in operation, determines that the second resource request is not to be transmitted if a time period from a transmission of the resource request to the reception of the DCI exceeds a second threshold, and determines that the second resource request is to be transmitted if the time period does not exceed the second threshold. According to a second aspect, provided is a method for a user equipment, UE, wherein the method comprises receiving Downlink Control Information, DCI, including a Channel State Information, CSI, request, wherein the CSI request indicates a group of CSI report configurations, and the group of CSI report configurations includes an event-triggered CSI report configuration and/or a network, NW,-requested CSI report configuration, wherein the event-triggered CSI report configuration pertains to event-triggered CSI information and the NW-requested CSI report configuration pertains to NW-requested CSI information; performing a determination as to which of the event-triggered CSI information and/or the NW-requested CSI information is to be transmitted, based on the CSI request; and controlling a transceiver according to the determination.

In an embodiment, the method comprises determining that the NW-requested CSI information is to be transmitted if the group of CSI report configurations includes the NW-requested CSI report configuration pertaining to said NW-requested CSI information.

In an embodiment, the method comprises determining that no NW-requested CSI information is to be transmitted if there is no NW-requested CSI report configuration included in the group of CSI configurations.

In an embodiment, the method comprises determining that no event-triggered CSI information is to be transmitted (i) if the UE did not transmit a resource request for event-triggered CSI information, (ii) if the UE did transmit a resource request for event-triggered CSI information and the group of CSI report configurations does not include an event-triggered CSI report configuration matching the event-triggered CSI information of the resource request, and/or (iii) if a time period from a transmission of a resource request for event-triggered CSI information to the reception of the DCI exceeds a threshold.

In an embodiment, the method comprises controlling the transceiver not to transmit a CSI report if it is determined that no NW-requested CSI information and no event-triggered CSI information is to be transmitted; and controlling the transceiver to transmit a CSI report if it is determined that at least one of NW-requested CSI information and event-triggered CSI information is to be transmitted.

In an embodiment, the method comprises detecting an event that triggers transmission of event-triggered CSI information; transmitting a resource request for transmission of said event-triggered CSI information; and receiving the DCI in response to transmission of the resource request.

In an embodiment, the method comprises transmitting the resource request for transmission of a plurality of event-triggered CSI information; and determining only one event triggered CSI information to be transmitted, according to an event-triggered CSI report configuration included in the group of CSI report configurations.

In an embodiment, the method comprises determining the only one event-triggered CSI information according to a first priority rule of event-triggered CSI report configurations included in the group of CSI report configurations.

In an embodiment, the method comprises transmitting the resource request for transmission of a plurality of event-triggered CSI information; and determining a subset of event-triggered CSI information to be transmitted, according to event-triggered CSI report configurations included in the group of CSI report configurations.

In an embodiment, the method comprises determining the subset of event-triggered CSI information according to (i) whether or not an event-triggered CSI information is included in the plurality of event-triggered CSI information of the resource request and an event-triggered CSI report configuration included in the group of CSI report configurations matches said event-triggered CSI information, and/or (ii) a second priority rule of event-triggered CSI report configurations included in the group of CSI report configurations.

In an embodiment, the DCI indicates resources for transmission of a CSI report; the the method comprises, if it is determined that event-triggered CSI information and NW-requested CSI information is to be transmitted, truncating the event-triggered CSI information and/or NW-requested CSI information, according to a priority configuration based on the indicated resources to obtain truncated information; wherein the priority configuration indicates that event-triggered CSI information is to be truncated first or that NW-requested CSI information is to be truncated first; and the method comprises transmitting a CSI report indicating the truncated information.

In an embodiment, the method comprises, if one or more event-triggered CSI information indicated in the resource request is not transmitted in the CSI report, determining whether or not a second resource request is to be transmitted; and transmitting the second resource request, if it is determined that the second resource request is to be transmitted.

In an embodiment, the method comprises determining a subset of the one or more event-triggered CSI information not transmitted, based on a third priority rule; wherein the second resource request is for transmission of said subset of the one or more event-triggered CSI information.

In an embodiment, the method comprises determining that the second resource request is not to be transmitted if a time period from a transmission of the resource request to the reception of the DCI exceeds a second threshold; and determining that the second resource request is to be transmitted if the time period does not exceed the second threshold.

According to a third aspect, provided is a network node, comprising processing circuitry which, in operation, determines a group of CSI report configurations, wherein the group of CSI report configurations includes an event-triggered CSI report configuration and/or a network, NW,-requested CSI report configuration, the event-triggered CSI report configuration pertains event-triggered CSI information and the NW-requested CSI report configuration pertains to NW-requested CSI information; and a transceiver which, in operation, transmits Downlink Control Information, DCI, including a Channel State Information, CSI, request, wherein the CSI request indicates the group of CSI report configurations.

In an embodiment, the transceiver, in operation, receives a CSI report including the NW-requested CSI information and/or the event-triggered CSI information.

In an embodiment, the CSI report includes the NW-requested CSI information if the group of CSI report configurations includes the NW-requested CSI report configuration pertaining to said NW-requested CSI information.

In an embodiment, the CSI report includes no NW-requested CSI information if there is no NW-requested CSI report configuration included in the group of CSI configurations.

In an embodiment, the CSI report includes no event-triggered CSI information (i) if the UE did not transmit a resource request for event-triggered CSI information, (ii) if the UE did transmit a resource request for event-triggered CSI information and the group of CSI report configurations does not include an event-triggered CSI report configuration matching the event-triggered CSI information of the resource request, and/or (iii) if a time period from a transmission of a resource request for event-triggered CSI information by the UE to the reception of the DCI by the UE exceeds a threshold.

In an embodiment, the transceiver, in operation, receives a resource request for transmission of event-triggered CSI information, and transmits the DCI in response to reception of the resource request.

In an embodiment, the transceiver, in operation, receives the resource request for transmission of a plurality of event-triggered CSI information; and the CSI report includes only one event-triggered CSI information, according to an event-triggered CSI report configuration included in the group of CSI report configurations.

In an embodiment, the only one event-triggered CSI information is determined according to a first priority rule of event-triggered CSI report configurations included in the group of CSI report configurations.

In an embodiment, the transceiver, in operation, receives the resource request for transmission of a plurality of event-triggered CSI information; wherein the CSI report includes a subset of event-triggered CSI information to be transmitted, according to event-triggered CSI report configurations included in the group of CSI report configurations.

In an embodiment, the subset of event-triggered CSI information is determined according to (i) whether or not an event-triggered CSI information is included in the plurality of event-triggered CSI information of the resource request and an event-triggered CSI report configuration included in the group of CSI report configurations matches said event-triggered CSI information, and/or (ii) a second priority rule of event-triggered CSI report configurations included in the group of CSI report configurations.

In an embodiment, the DCI indicates resources for transmission of a CSI report; wherein, if it is determined that event-triggered CSI information and NW-requested CSI information is to be transmitted, the CSI report includes event-triggered CSI information and/or NW-requested CSI information, truncated according to a priority configuration based on the indicated resources to obtain truncated information; the priority configuration indicates that event-triggered CSI information is to be truncated first or that NW-requested CSI information is to be truncated first.

In an embodiment, the transceiver, in operation, receives a second resource request.

In an embodiment, the second resource request is for transmission of a subset of the one or more event-triggered CSI information, the subset being determined from the one or more event-triggered CSI information not transmitted, based on a third priority rule.

According to a fourth aspect, provided is a method for a network node, wherein the method comprises determining a group of CSI report configurations, wherein the group of CSI report configurations includes an event-triggered CSI report configuration and/or a network, NW,-requested CSI report configuration, the event-triggered CSI report configuration pertains event-triggered CSI information and the NW-requested CSI report configuration pertains to NW-requested CSI information; and transmitting Downlink Control Information, DCI, including a Channel State Information, CSI, request, wherein the CSI request indicates the group of CSI report configurations.

In an embodiment, the method comprises receiving a CSI report including the NW-requested CSI information and/or the event-triggered CSI information.

In an embodiment, the CSI report includes the NW-requested CSI information if the group of CSI report configurations includes the NW-requested CSI report configuration pertaining to said NW-requested CSI information.

In an embodiment, the CSI report includes no NW-requested CSI information if there is no NW-requested CSI report configuration included in the group of CSI configurations.

In an embodiment, the CSI report includes no event-triggered CSI information (i) if the UE did not transmit a resource request for event-triggered CSI information, (ii) if the UE did transmit a resource request for event-triggered CSI information and the group of CSI report configurations does not include an event-triggered CSI report configuration matching the event-triggered CSI information of the resource request, and/or (iii) if a time period from a transmission of a resource request for event-triggered CSI information by the UE to the reception of the DCI by the UE exceeds a threshold.

In an embodiment, the method comprises receiving a resource request for transmission of event-triggered CSI information; and transmitting the DCI in response to reception of the resource request.

In an embodiment, the method comprises receiving the resource request for transmission of a plurality of event-triggered CSI information; wherein the CSI report includes only one event-triggered CSI information, according to an event-triggered CSI report configuration included in the group of CSI report configurations.

In an embodiment, the only one event-triggered CSI information is determined according to a first priority rule of event-triggered CSI report configurations included in the group of CSI report configurations.

In an embodiment, the method comprises receiving the resource request for transmission of a plurality of event-triggered CSI information; wherein the CSI report includes a subset of event-triggered CSI information to be transmitted, according to event-triggered CSI report configurations included in the group of CSI report configurations.

In an embodiment, the subset of event-triggered CSI information is determined according to (i) whether or not an event-triggered CSI information is included in the plurality of event-triggered CSI information of the resource request and an event-triggered CSI report configuration included in the group of CSI report configurations matches said event-triggered CSI information, and/or (ii) a second priority rule of event-triggered CSI report configurations included in the group of CSI report configurations.

In an embodiment, the DCI indicates resources for transmission of a CSI report; wherein, if it is determined that event-triggered CSI information and NW-requested CSI information is to be transmitted, the CSI report includes event-triggered CSI information and/or NW-requested CSI information, truncated according to a priority configuration based on the indicated resources to obtain truncated information; the priority configuration indicates that event-triggered CSI information is to be truncated first or that NW-requested CSI information is to be truncated first.

In an embodiment, the method comprises receiving a second resource request.

In an embodiment, the second resource request is for transmission of a subset of the one or more event-triggered CSI information, the subset being determined from the one or more event-triggered CSI information not transmitted, based on a third priority rule.

According to a fourth aspect, provided is a non-transient computer-readable storage medium storing instructions, which, when executed by one or more computers, causes the one or more computers to perform any one of the methods described above.

According to a fifth aspect, provided is a computer program comprising instructions, which, when the program is executed by a computer, cause the computer to carry out the steps of any one of the methods described above.

Summarizing, the disclosure relates to a user equipment, UE, comprising a transceiver which, in operation, receives Downlink Control Information, DCI, including a Channel State Information, CSI, request. The CSI request indicates a group of CSI report configurations, and the group of CSI report configurations includes an event-triggered CSI report configuration and/or a network, NW,-requested CSI report configuration, wherein the event-triggered CSI report configuration pertains to event-triggered CSI information and the NW-requested CSI report configuration pertains to NW-requested CSI information. The UE further comprises processing circuitry which, in operation, performs a determination as to which of the event-triggered CSI information and/or the NW-requested CSI information is to be transmitted, based on the CSI request, wherein the processing circuitry controls the transceiver according to the determination.

## Claims

1. A user equipment, UE, comprising
a transceiver which, in operation, receives Downlink Control Information, DCI, including a Channel State Information, CSI, request, wherein
the CSI request indicates a group of CSI report configurations, and
the group of CSI report configurations includes an event-triggered CSI report configuration and/or a network, NW,-requested CSI report configuration, wherein
the event-triggered CSI report configuration pertains to event-triggered CSI information and the NW-requested CSI report configuration pertains to NW-requested CSI information; and
processing circuitry which, in operation, performs a determination as to which of the event-triggered CSI information and/or the NW-requested CSI information is to be transmitted, based on the CSI request, wherein
the processing circuitry controls the transceiver according to the determination.

2. The UE according to claim 1, wherein
the processing circuitry, in operation, determines that the NW-requested CSI information is to be transmitted if the group of CSI report configurations includes the NW-requested CSI report configuration pertaining to said NW-requested CSI information.

3. The UE according to claim 1 or 2, wherein
the processing circuitry, in operation, determines that no NW-requested CSI information is to be transmitted if there is no NW-requested CSI report configuration included in the group of CSI configurations.

4. The UE according to any one of claims 1 to 3, wherein
the processing circuitry, in operation, determines that no event-triggered CSI information is to be transmitted
• if the UE did not transmit a resource request for event-triggered CSI information,
• if the UE did transmit a resource request for event-triggered CSI information and the group of CSI report configurations does not include an event-triggered CSI report configuration matching the event-triggered CSI information of the resource request, and/or
• if a time period from a transmission of a resource request for event-triggered CSI information to the reception of the DCI exceeds a threshold.

5. The UE according to any one of claims 1 to 4, wherein
the processing circuitry, in operation, controls the transceiver not to transmit a CSI report if it is determined that no NW-requested CSI information and no event-triggered CSI information is to be transmitted; and
the processing circuitry, in operation, controls the transceiver to transmit a CSI report if it is determined that at least one of NW-requested CSI information and event-triggered CSI information is to be transmitted.

6. The UE according to any one of claims 1 to 5, wherein
the processing circuitry, in operation, detects an event that triggers transmission of event-triggered CSI information; and
the transceiver, in operation,
transmits a resource request for transmission of said event-triggered CSI information, and
receives the DCI in response to transmission of the resource request.

7. The UE according to claim 6, wherein
the transceiver, in operation, transmits the resource request for transmission of a plurality of event-triggered CSI information; and
the processing circuitry, in operation, determines only one event triggered CSI information to be transmitted, according to an event-triggered CSI report configuration included in the group of CSI report configurations.

8. The UE according to claim 7, wherein
the processing circuitry determines the only one event-triggered CSI information according to a first priority rule of event-triggered CSI report configurations included in the group of CSI report configurations.

9. The UE according to claim 6, wherein
the transceiver, in operation, transmits the resource request for transmission of a plurality of event-triggered CSI information; and
the processing circuitry, in operation, determines a subset of event-triggered CSI information to be transmitted, according to event-triggered CSI report configurations included in the group of CSI report configurations.

10. The UE according to claim 9, wherein
the processing circuitry, in operation, determines the subset of event-triggered CSI information according to
• whether or not an event-triggered CSI information is included in the plurality of event-triggered CSI information of the resource request and an event-triggered CSI report configuration included in the group of CSI report configurations matches said event-triggered CSI information, and/or
• a second priority rule of event-triggered CSI report configurations included in the group of CSI report configurations.

11. The UE according to any one of claims 6 to 10, wherein
the DCI indicates resources for transmission of a CSI report;
the processing circuitry, in operation, if it is determined that event-triggered CSI information and NW-requested CSI information is to be transmitted, truncates the event-triggered CSI information and/or NW-requested CSI information, according to a priority configuration based on the indicated resources to obtain truncated information;
the priority configuration indicates that event-triggered CSI information is to be truncated first or that NW-requested CSI information is to be truncated first; and
the transceiver, in operation, transmits a CSI report indicating the truncated information.

12. The UE according to any one of claims 6 to 11, wherein
the processing circuitry, in operation, if one or more event-triggered CSI information indicated in the resource request is not transmitted in the CSI report, determines whether or not a second resource request is to be transmitted; and
the transceiver, in operation, transmits the second resource request, if it is determined that the second resource request is to be transmitted.

13. The UE according to claim 12, wherein
the processing circuitry, in operation, determines a subset of the one or more event-triggered CSI information not transmitted, based on a third priority rule; and
the second resource request is for transmission of said subset of the one or more event-triggered CSI information.

14. The UE according to claim 12 or 13, wherein
the processing circuitry, in operation,
determines that the second resource request is not to be transmitted if a time period from a transmission of the resource request to the reception of the DCI exceeds a second threshold, and
determines that the second resource request is to be transmitted if the time period does not exceed the second threshold.

15. A network node, comprising
processing circuitry which, in operation, determines a group of CSI report configurations, wherein
the group of CSI report configurations includes an event-triggered CSI report configuration and/or a network, NW,-requested CSI report configuration,
the event-triggered CSI report configuration pertains event-triggered CSI information and the NW-requested CSI report configuration pertains to NW-requested CSI information; and
a transceiver which, in operation, transmits Downlink Control Information, DCI, including a Channel State Information, CSI, request, wherein
the CSI request indicates the group of CSI report configurations.
